# EUROPÄISCHE PATENTSCHRIFT

(11) **EP 2 952 296 B1**
(45) Veröffentlichungstag und Bekanntmachung des Hinweises auf die Patenterteilung: **14.12.2022**
(21) Anmeldenummer: 15157739.2
(22) Anmeldetag: 05.03.2015
(51) Int. Cl.: B25J 9/00, B25J 19/02, B65G 47/14

(54) **VORRICHTUNG ZUM AUTOMATISIERTEN ENTNEHMEN VON IN EINEM BEHÄLTER ANGEORDNETEN WERKSTÜCKEN**
DEVICE FOR THE AUTOMATED REMOVAL OF WORKPIECES ARRANGED IN A CONTAINER
DISPOSITIF DE PRÉLÈVEMENT AUTOMATISÉ DE PIÈCES AGENCÉES DANS UN RÉCIPIENT

(30) Priorität: 06.06.2014 DE 102014008444
(43) Veröffentlichungstag der Anmeldung: 09.12.2015
(73) Patentinhaber: Liebherr-Verzahntechnik GmbH, 87437 Kempten (DE)
(72) Erfinder: MUNDT, Alois, Dr., 87435 Kempten (DE); MATTERN, Thomas, 87669 Rieden (DE); HÄNSCHKE, David, 87452 Altusried (DE); RIEDMILLER, Bernhard, 87497 Wertach (DE)
(74) Vertreter: Behr, Wolfgang

(56) Entgegenhaltungen:
- EP-A1- 2 679 352
- AT-B- 386 977
- DE-A1-102008 052 440
- DE-T5-112012 002 677
- DE-U1-202011 103 280

## Beschreibung

Die vorliegende Erfindung betrifft eine Vorrichtung zum automatisierten Entnehmen von in einem Behälter angeordneten Werkstücken. Insbesondere dient die erfindungsgemäße Vorrichtung dabei dazu, ungeordnet in einem Behälter angeordnete Werkstücke zu entnehmen und in einer Ziel-Ablage abzulegen.

Die Vorrichtung umfasst dabei eine Objekterkennungseinrichtung zum Erfassen der Werkstücke und einen Greifer zum Greifen und Entnehmen der Werkstücke aus dem Behälter, eine Steuerung zur Auswertung der Daten der Objekterkennungseinrichtung, zur Pfadplanung und zur Ansteuerung des Greifers, und eine Zwischenstation, auf welcher der Greifer die Werkstücke nach dem Entnehmen aus dem Behälter ablegt. Weiterhin ist dabei vorgesehen, dass die Werkstücke von einem Greifer von der Zwischenstation aufgenommen und in einer Ziel-Ablage abgelegt werden. Insbesondere kann es sich bei der Ziel-Ablage um eine Werkstück-Ablage einer Transport-, Bearbeitungs- und/oder Montageeinreichung handeln.

Eine solche Vorrichtung ist beispielsweise aus der EP 2679352 A1 bekannt.

Dabei werden die Werkstücke von einem magnetischen Greifer aus dem Behälter entnommen, ungeordnet auf der Zwischenstation abgelegt und von der Zwischenstation mit einem mechanischen Greifer mit höherer Genauigkeit wieder aufgenommen.

Weiterhin ist aus der EP 2698234 A2 eine Vorrichtung zum Entnehmen von ungeordnet in einem Behälter angeordneten Werkstücken bekannt, bei welcher die Entnahme aus dem Behälter und das Ablegen auf einer Ziel-Ablage ohne Zwischenschalten einer Zwischenstation unmittelbar erfolgt, und zwar insbesondere über den Einsatz eines Greifarmelements mit einer oder zwei zusätzlichen Achsen, an welchem ein mechanischer Greifer angeordnet ist.

Aus der DE 10 2008 052 440 A1 ist ebenfalls eine solche Vorrichtung bekannt. Dabei sind auf der Zwischenstation zwei unterschiedliche Werkstückaufnahmen vorgesehen, welche zur Aufnahme unterschiedlicher Werkstücke vorgesehen sind und jeweils an die Form und Größe des aufzunehmenden Werkstücks angepasst sind. Weiterhin können unterschiedliche Greifpunkte an dem Werkstück ermittelt werden, um dieses ohne Kollisionen aus dem Behälter entnehmen zu können.

Um jedoch alle Werkstücke aus dem Behälter mittels des Greifers entnehmen zu können, muss eine möglichst hohe und vorzugsweise uneingeschränkte Anzahl von möglichen Greifpositionen des Greifers am Werkstück zugelassen werden, um so möglichst viele Freiheitsgrade bezüglich der Bewegung des Greifers zur Verfügung zu haben. Nur so können auch noch kritische Teile im Behälter gegriffen werden. Denn durch die spezifische Lage eines Werkstücks innerhalb des Behälters steht ohnehin üblicherweise nur eine sehr eingeschränkte Untergruppe aller theoretisch zulässigen Greifpositionen zur Verfügung.

Allerdings erlaubt - bedingt durch die Werkstückkontur und / oder die Kontur des Greifers - nicht jede Greifposition, welche beim Greifen im Behälter eingesetzt werden könnte, ein positionsgenaues Ablegen des Werkstücks an einer vordefinierten Ziel-Ablage. Werden jedoch nur jene Greifpositionen zum Entnehmen aus dem Behälter zugelassen, welche eine solche positionsgenaue und vordefinierte Ablage des Werkstücks erlauben, wird hierdurch die 100 %ige Entleerung des Behälters beeinträchtigt oder sogar verhindert.

Aufgabe der vorliegenden Erfindung ist es daher, eine Vorrichtung zum automatisierten Entnehmen von in einem Behälter angeordneten Werkstücken zur Verfügung zu stellen, welche zum einen eine maximale Entleerung des Behälters und zum anderen eine positionsgenaue, vororientierte und/oder flexible Ablage des Werkstücks erlaubt.

Diese Aufgabe wird erfindungsgemäß durch eine Vorrichtung gemäß Anspruch 1 gelöst.

Die erfindungsgemäße Vorrichtung zum automatisierten Entnehmen von in einem Behälter angeordneten Werkstücken umfasst eine Objekterkennungseinrichtung zum Erfassen der Werkstücke und einen Greifer zum Greifen und Entnehmen der Werkstücke aus dem Behälter. Weiterhin ist eine Steuerung zur Auswertung der Daten der Objekterkennungseinrichtung, zur Pfadplanung und zur automatischen Ansteuerung des Greifers vorgesehen, sowie eine Zwischenstation, auf welcher der Greifer die Werkstücke nach dem Entnehmen aus dem Behälter ablegt. Dabei ist die Steuerung der Vorrichtung so ausgestaltet, dass die Werkstücke von einem Greifer automatisiert von der Zwischenstation aufgenommen und in einer Ziel-Ablage abgelegt werden. Insbesondere kann es sich bei der Ziel-Ablage um eine Werkstück-Ablage einer Transport-, Bearbeitungs- und/oder Montageeinreichung handeln. Erfindungsgemäß weist die Zwischenstation dabei mindestens zwei unterschiedliche Werkstückablagen zum Ablegen der Werkstücke in mindestens zwei unterschiedlichen, definierten Ablagepositionen auf. Bevorzugt wird die Vorrichtung gemäß der vorliegenden Erfindung dabei zum Entnehmen von ungeordnet in dem Behälter angeordneten Werkstücken eingesetzt.

Anders als gemäß dem Stand der Technik in der EP 2679352 A2 erfolgt das Ablegen auf der Zwischenstation damit nicht ungeordnet, sondern in mehreren, durch die Werkstückablagen fest vorgegebenen Positionen. Hierdurch ist nach dem Ablegen auf der Zwischenstation die Position und Ausrichtung der Werkstücke auf dieser bekannt, ein weiterer Scan ist nicht notwendig. Insbesondere erfolgt das Ablegen auf der Zwischenstation dabei in einer durch die jeweiligen Werkstückablagen definierten Position und Ausrichtung. Durch die erfindungsgemäß vorgesehenen mindestens zwei unterschiedlichen Werkstückablagen auf der Zwischenstation werden jedoch die Greifpositionen, mit welchen die Werkstücke im Behälter gegriffen werden können, weniger eingeschränkt als bei dem direkten Ablegen eines Werkstücks in einer einzigen vordefinierten Ziel-Ablage. Dies ermöglicht wiederum eine bessere, und bevorzugt 100 %ige Entleerung des Behälters.

In einer möglichen Ausführungsform befindet sich dabei zu jedem Zeitpunkt maximal ein Werkstück auf der Zwischenstation.

In einer alternativen Ausführungsform kann die Zwischenstation als Puffer dienen, indem mehr als ein Werkstück auf der Zwischenablage abgelegt wird. Ein solches Vorgehen ist insbesondere bei der Verwendung von zwei Greifern von Vorteil, um Unterschiede in den Taktzeiten auszugleichen. Die Taktzeiten für den Griff im Behälter und das Ablegen auf der Zwischenstation können dabei je nach Greifpunkt an dem Werkstück im Behälter und der Position des Werkstücks im Behälter erheblich variieren. Insbesondere kann dabei je nach dem gerade zu greifenden Werkstück die Aufnahme von der Zwischenstation und Ablage in der Ziel-Ablage langsamer als der Griff im Behälter und die Ablage auf der Zwischenstation erfolgen, oder umgekehrt. Insbesondere können dabei in Phasen, in welchen die Taktzeit für den Griff aus dem Behälter kleiner ist als die Taktzeit für das Ablegen auf der Ziel-Ablage mehr als ein Werkstück auf der Zwischenstation abgelegt werden, welche in Phasen, in welchen die Taktzeit für den Griff aus dem Behälter größer ist als die Taktzeit für das Ablegen auf der Ziel-Ablage wieder abgenommen werden.

Vorteilhafterweise weist die Zwischenstation hierfür mehr Werkstückablagen auf, als für das Ablegen eines Werkstückes mit beliebigen Greifpunkten notwendig wären. Insbesondere kann die Zwischenstation dabei von jeder Art von Werkstückablage mindestens zwei Exemplare umfassen. Die Zwischenstation kann dabei auch mindestens separate Untereinheiten aufweisen, von welchen jede jeweils auch für sich genommen als Zwischenstation gemäß der vorliegenden Erfindung für ein Werkstück dienen könnte.

Vorteilhafterweise erfolgt das Greifen der Werkstücke im Behälter dabei mit einer Mehrzahl von unterschiedlichen zulässigen Greifpositionen. Bevorzugt werden dabei alle Greifpositionen, mit welchen der Greifer ein Werkstück greifen kann, zugelassen. Hierdurch wird die Entleerung verbessert. Bevorzugt weist dabei die Zwischenstation so viele unterschiedliche Werkstückablagen auf, dass für im wesentlichen jede zulässige Greifposition beim Greifen der Werkstücke im Behälter mindestens eine Werkstückablage zur Verfügung steht, an welcher das Werkstück auf der Zwischenstation abgelegt werden kann.

Bevorzugt erfolgt die Auswahl der zum Ablegen genutzten Werkstückablage der Zwischenstation dabei auf Grundlage der Greifposition, mit welcher das Werkstück aus dem Behälter entnommen wird oder wurde.

In einer möglichen Ausführungsform wird dabei die Werkstückablage, in welcher das Werkstück auf der Zwischenstation abgelegt wird, bereits vor bzw. während des Greifens eines Werkstücks im Behälter ermittelt, sodass die zur Verfügung stehenden Werkstückablagen bereits bei der Auswahl der Greifposition zum Greifen im Behälter einfließen können.

In einer bevorzugten Ausführungsform erfolgt die Auswahl der zum Ablegen genutzten Werkstückablage dagegen erst dann, wenn ein Griff des Werkstücks im Behälter erfolgt ist. Hierdurch kann die Zeit, welche für das Entnehmen des Werkstücks aus dem Behälter benötigt wird, zu der Ermittlung der zum Ablegen nutzbaren Werkstückablagen und zur Auswahl der Werkstückablage genutzt werden.

In einer möglichen Ausführungsform der vorliegenden Erfindung erfolgt die Auswahl der Werkstückablage dabei aufgrund einer vordefinierten Zuordnung zwischen bestimmten Greifpositionen und bestimmten Werkstückablagen. Insbesondere kann dabei am Werkstück eine Mehrzahl von vorbestimmten Greifpositionen definiert sein, in welchen die Werkstücke gegriffen werden können. Diese sind bevorzugt einer oder mehreren Werkstückablagen zugeordnet, welche im Allgemeinen ein in einer solchen Greifposition gegriffenes Werkstück aufnehmen können. Insbesondere kann die Auswahl dabei über eine Abfrage einer in der Steuerung hinterlegten Zuordnungstabelle zwischen den Greifpositionen und den Werkstückablagen erfolgen.

Erfindungsgemäß kann weiterhin vorgesehen sein, dass das Greifen der Werkstücke im Behälter mit einer Mehrzahl von unterschiedlichen zulässigen Greifpunkten erfolgt. Solche zulässigen Greifpunkte können dann wie oben beschrieben bestimmten Werkstückablagen zugeordnet sein.

Weiterhin ist es möglich, dass das Greifen der Werkstücke im Behälter auch in sich um solche Greifpunkte erstreckenden zulässigen Greifbereichen erfolgen kann. Insbesondere kann dabei beim Greifen ein gewisser Off-Set gegenüber gewissen Greifpunkten erlaubt sein.

Auch hier kann zur Auswahl der Werkstückablage eine vordefinierte Zuordnung zwischen zulässigen Greifbereichen und Werkstückablagen genutzt werden.

Alternativ oder zusätzlich kann jedoch auch eine Kollisionsprüfung erfolgen, bei welcher anhand eines geometrischen Modells überprüft wird, ob ein kollisionsfreies Ablegen eines in einer spezifischen Greifposition gegriffenen Werkstücks auf einer Werkstückablage der Zwischenstation möglich ist. Die Kollisionsprüfung kann dabei vor dem Greifen des Werkstücks im Behälter erfolgen. So wird vermieden, dass ein gegriffenes Werkstück nicht auf der Zwischenstation abgelegt werden kann und wieder in den Behälter zurück abgelegt werden muss. In einer alternativen Ausführungsform erfolgt diese Kollisionsprüfung dagegen nach dem Greifen des Werkstücks im Behälter. Hierdurch kann die Zeit, in welcher das Werkstück aus dem Behälter entnommen wird, zur Durchführung der Kollisionsprüfung genutzt werden. In einer weiteren bevorzugten Ausführungsform kann die Kollisionsprüfung parallel zum Greifprozess stattfinden um Zykluszeiten zu reduzieren.

In einer besonders bevorzugten Ausführungsform erfolgt dabei zunächst eine Auswahl der Werkstückablagen, auf welchen eine Ablage potentiell möglich ist, durch eine vordefinierte Zuordnung zwischen zulässigen Greifpunkten bzw. zulässigen Greifbereichen und den Werkstückablagen. Dem ist bevorzugt eine Kollisionsprüfung nachgeschaltet, welche überprüft, ob tatsächlich ein kollisionsfreies Ablegen auf wenigstens einer der Werkstückablagen möglich ist. Ist dies nicht der Fall, so wird das Werkstück bevorzugt nicht gegriffen oder wieder im Behälter abgelegt.

Bei der Kollisionsprüfung kann dabei ein geometrisches Modell sowohl der Zwischenstation, als auch des Greifers und des Werkstücks eingesetzt werden, um Kollisionen beim Ablegen eines Werkstücks auf der Zwischenstation sicher zu erkennen.

Weiterhin kann ein Sensor vorgesehen sein, welcher die Greifposition des Greifers nach dem Greifen im Behälter und vor dem Ablegen auf der Zwischenposition ermittelt. Hierdurch kann eine Veränderung in der beim Greifen im Behälter beabsichtigten Greifposition erkannt werden, welche bspw. durch ein Verrutschen des Werkstücks am Greifer bedingt sein kann. Bevorzugt erfolgt die Auswahl der Werkstückablage auf der Zwischenstation und/oder die Kollisionsprüfung auf Grundlage der vom Sensor ermittelten Greifposition. Als Sensor kann beispielsweise eine Kamera oder ein Laserabstandssensor eingesetzt werden. Der Sensor ist bevorzugt an der Zwischenstation angeordnet, wobei der Greifer das Werkstück nach dem Herausnehmen aus dem Behälter zunächst in den Bereich des Sensors bewegt, bevor ein Ablegen auf der Zwischenstation erfolgt. Weiterhin bevorzugt kann der Sensor zwischen dem Behälter und der Zwischenstation angeordnet sein.

In einer möglichen Ausführungsform der vorliegenden Erfindung erfolgt in Abhängigkeit von der Greifposition, mit welcher das Werkstück im Behälter gegriffen wurde, eine Entscheidung, ob das Werkstück zunächst auf der Zwischenstation abgelegt wird, um von dort nochmals aufgenommen zu werden, oder direkt an der Ziel-Ablage abgelegt wird. Dabei können einige Greifpunkte vorgesehen sein, bei welchen ein direktes Ablegen auf der Ziel-Ablage erfolgt, und andere Greifpunkte, welche ein Ablegen auf der Zwischenstation notwendig machen. Die Entscheidung kann dabei in einer möglichen Ausführungsform erfolgen, nachdem die Greifposition über einen Sensor ermittelt wurde.

Weiterhin können bestimmte Greifpunkte beim Griff im Behälter bevorzugt ausgewählt werden, insbesondere solche, welche ein direktes Ablegen auf einer Ziel-Ablage oder eine geringere Zykluszeit beim Ablegen und Wiederaufnehmen auf der Zwischenablage benötigen als andere Greifpunkte, und/oder Greifpunkte, welche ein sichereres Greifen ermöglichen. Gibt es daher im Behälter mehrere Werkstücke, welche gegriffen werden könnten, erfolgt die Auswahl des tatsächlich gegriffenen Werkstücks vorteilhafterweise anhand der jeweils zur Verfügung stehenden Greifpunkte.

Gemäß der vorliegenden Erfindung erfolgt das Aufnehmen des Werkstücks von der Zwischenstation bevorzugt mit weniger zulässigen Greifpositionen als das Greifen im Behälter. Die Zwischenstation sorgt so für eine Reduktion der zulässigen Greifpositionen. Bevorzugt kann das Werkstück dabei von der Zwischenstation immer mit einer Greifposition gegriffen werden, welche ein eindeutiges vordefiniertes Ablegen in einer Ziel-Ablage ermöglicht. Bevorzugt ermöglicht das Greifen von der Zwischenstation dabei das Ablegen aller Werkstücke in einer einzigen, vordefinierten Position und / oder Ausrichtung und / oder an einer einzigen Art von Ziel-Ablage.

Bevorzugt erfolgt das Aufnehmen des Werkstücks von der Zwischenstation dabei mit nur einer einzigen oder mit den Greifpositionen die ein endgültiges Ablegen in der Endposition zulassen

In einer möglichen ersten Ausführungsform der vorliegenden Erfindung wird derselbe Greifer zum Greifen der Werkstücke aus dem Behälter und zum Aufnehmen von der Zwischenablage eingesetzt.

Alternativ werden zwei separate Greifer zum Greifen der Werkstücke aus dem Behälter und zum Aufnehmen von der Zwischenablage eingesetzt. Der Einsatz von zwei separaten Greifern erhöht dabei die Taktrate, da der erste Greifer schon wieder zum Greifen eines Werkstücks aus dem Behälter eingesetzt wird, während der zweite Greifer ein Werkstück von der Zwischenablage aufnimmt und an der Ziel-Ablage ablegt. Bevorzugt werden die beiden separaten Greifer dabei durch separate Greifarme bewegt.

Erfindungsgemäß kann es sich bei dem Greifer zum Greifen der Werkstücke im Behälter und / oder zum Aufnehmen von der Zwischenablage um einen magnetischen, pneumatischen oder mechanischen Greifer, ggf. auch eine Kombination aus diesen Möglichkeiten, besonders bevorzugt um einen mechanischen Greifer handeln. Ein solcher mechanischer Greifer erlaubt eine höhere Greifgenauigkeit. Insbesondere kann es sich dabei um einen Fingergreifer oder einen Backengreifer handeln. Bevorzugt ist der Greifer dabei gekröpft am Greifarm oder einer Greifarmverlängerung angeordnet. Insbesondere kann der Greifer dabei so ausgestaltet sein, wie dies aus der EP 2679352 A1 für den Greifer zum Abnehmen der Werkstücke von der Zwischenstation sowie aus der EP 2698234 A2 für den Greifer zum Entnehmen der Werkstücke aus dem Behälter bekannt ist. Insbesondere kann es sich dabei um einen Zwei-Fingergreifer handeln. Werden dabei zwei separate Greifer zum Greifen der Werkstücke in dem Behälter und zum Abnehmen von der Zwischenstation eingesetzt, so können hierfür in einer möglichen Ausführungsform identisch ausgeführte Greifer eingesetzt werden. Bevorzugt kommen jedoch unterschiedliche Greifer zum Einsatz, da für den Griff im Behälter höhere Anforderungen an den Greifer zu stellen sind als der für die Aufnahme von der Zwischenstation.

Das Greifen der Werkstücke aus dem Behälter erfolgt erfindungsgemäß anhand der Daten einer Objekterkennungseinrichtung. Als Objekterkennungseinrichtung kann grundsätzlich jedes beliebige System zum Einsatz kommen, welches die Identifizierung der Werkstücke und die Auswahl eines zum Greifen geeigneten Werkstücks erlaubt.

Ist die Position der Werkstücke im Behälter vorab bekannt, beispielsweise weil diese geordnet im Behälter angeordnet sind, so kann die Objekterkennungseinrichtung gegebenenfalls auch nur anhand solcher vorbekannten Positionsdaten erfolgen.

Das Erfassen der Werkstücke umfasst jedoch vorteilhafterweise eine Datenerhebung durch einen Messvorgang. Dann erfolgt durch Auswertung der Daten eine Identifizierung der einzelnen Werkstücke im Erfassungsbereich, aus welchen ein zum Greifen geeignetes Werkstück ausgewählt wird. Dabei werden bevorzugt die möglichen Greifpositionen, mit welchen ein solches Werkstück gegriffen werden kann, ermittelt und eine zum Greifen geeignete Greifposition ausgewählt. Auf Grundlage der Positionsdaten des Werkstücks sowie der ausgewählten Greifposition wird dann die Bewegung des Greifers bzw. des diesen bewegenden Greifarmes geplant. Dabei kann eine Kollisionsprüfung durchgeführt werden, sodass ein Bewegungsablauf gewählt wird, bei welchem der Greifer bzw. der Greifarm nicht mit Störkanten wie beispielsweise den anderen Werkstücken und / oder den Seitenwänden des Behälters kollidiert. Anhand der so berechneten Daten wird dann der Greifer bzw. der Greifarm angesteuert.

Als Objekterfassungseinrichtung kommen dabei insbesondere optische Sensoren zum Einsatz, wobei insbesondere Laser- und / oder Bildsensoren zum Einsatz kommen können. Die Sensoren können dabei zweidimensional, zwei-einhalb-dimensional oder dreidimensional arbeiten. Besonders bevorzugt kommt dabei ein 3-D-Laserscanner zum Einsatz.

Die Objekterkennungseinrichtung zum Erfassen der Werkstücke im Behälter ist dabei bevorzugt in ihrer Messposition oberhalb des Behälters angeordnet.

Das Erfassen der Werkstücke, die Bahnplanung und das Greifen und Entnehmen der Werkstücke aus dem Behälter kann dabei insbesondere so erfolgen, wie dies aus der EP 2698234 A2 und / oder der EP 2679352 A1 bekannt ist.

In einer möglichen Ausführungsform der vorliegenden Erfindung kann auf der Zwischenstation eine nochmalige Objekterkennung des Werkstücks erfolgen, sodass das Aufnehmen des Werkstücks von der Zwischenstation auf Grundlage dieser nochmaligen Objekterkennung erfolgt.

Gemäß einer bevorzugten Ausführungsform der vorliegenden Erfindung erfolgt das Aufnehmen des Werkstücks von der Zwischenstation jedoch auf Grundlage der bekannten Position der verwendeten Werkstückablage und der bekannten Form des Werkstücks. Besonders bevorzugt erfolgt das Aufnehmen dabei ohne eine zuvorige Objekterkennung des Werkstücks auf der Zwischenstation oder zumindest mit einer weniger aufwändigen Objekterkennung als bei dem Griff im Behälter. Hierdurch kann die Zykluszeit verringert werden.

Erfindungsgemäß kann die Zwischenablage eine Verstellanordnung umfassen, welche eine Veränderung der Position und/oder Ausrichtung eines auf der Zwischenablage abgelegten Werkstücks und/oder eines Ablageelementes erlaubt. Hierdurch kann die Position und/oder Ausrichtung des Werkstücks an der Zwischenstation nach dem Ablegen verändert werden oder ein Ablageelement vom Werkstück weggefahren werden, um einen Greifpunkt freizugeben.

Die Positionsänderung des Werkstücks und/oder eines Ablageelementes erlaubt damit bevorzugt das Aufnehmen des Werkstücks mit einem Greifpunkt, welcher in der Ablageposition nicht zur Verfügung stand. Hierdurch kann ein Umgreifen auf der Zwischenstation erfolgen, d.h. das Aufnehmen mit einem anderen Greifpunkt.

Die Verstellanordnung wird dabei bevorzugt dazu eingesetzt, um das Werkstück von der Ablageposition, in welcher es auf der Zwischenstation abgelegt wurde, in eine definierte Aufnahmeposition zu bewegen. In dieser Aufnahmeposition wird das Werkstück bevorzugt gegriffen, um auf einer Ziel-Ablage abgelegt zu werden.

Beispielsweise kann dabei ein Werkstück, welches an einer Innenkontur gegriffen abgelegt wurde, durch die Verstellanordnung in eine Aufnahmeposition bewegt werden, welche ein Greifen an einer Außenkontur erlaubt und/oder umgekehrt.

Die Verstellanordnung kann dabei eine Drehung, Verschwenkung und/oder Verschiebung des Werkstückes vornehmen. In einer möglichen Ausführung wird dabei eine Linearverschiebung des Werkstücks vorgenommen.

Insbesondere kann dabei vorgesehen sein, die Werkstücke in eine oder mehrere definierte Aufnahmepositionen zu verfahren. Insbesondere kann dabei vorgesehen sein, dass durch die Verstellanordnung Werkstücke, welche in unterschiedlichen Werkstückablagen abgelegt wurden, dennoch in eine identische Aufnahmeposition verfahren werden. Bevorzugt sind dabei weniger Aufnahmepositionen als Werkstückablagen vorgesehen. Insbesondere können dabei nur eine oder zwei Aufnahmepositionen vorgesehen sein.

Bevorzugt ist die Zwischenstation dabei so ausgestaltet, dass die Position mindestens einer der Werkstückablagen kinematisch verstellbar ist. Insbesondere kann dabei mindestens ein Antrieb vorgesehen sein, über welchen die Verstellung erfolgt. Insbesondere kann die Verstellung dabei auf Grundlage der Greifposition erfolgen, mit welcher das Werkstück aus dem Behälter entnommen wird oder wurde. Insbesondere kann dabei die jeweils verwendete Werkstückablage in eine Ablageposition und / oder eine Aufnahmeposition verfahren werden. Das Verfahren der Werkstückablage kann dabei entweder vor dem Ablegen auf der Zwischenstation erfolgen, oder während oder nach dem erfolgten Ablegen.

Insbesondere kann das Verfahren der Werkstückablage dabei dazu eingesetzt werden, um trotz Ablegens der Werkstücke in unterschiedlichen Werkstückablagen diese in einer übereinstimmenden Ablageposition und / oder Ausrichtung ablegen zu können, und / oder um die Werkstücke trotz der Ablage in unterschiedlichen Werkstückablagen bevorzugt in nur einer Aufnahmeposition von der Zwischenstation aufnehmen zu können.

Die Zwischenstation kann erfindungsgemäß mindestens ein kinematisch verstellbares Ablageelement aufweisen. Insbesondere kann dabei mindestens ein Antrieb vorgesehen sein, über welchen die Verstellung erfolgt. Die kinematische Verstellung des Ablageelementes kann dabei zu unterschiedlichen Zwecken eingesetzt werden:
Beispielsweise ist es denkbar, durch ein Verstellen des Ablageelementes mindestens zwei unterschiedliche Werkstückablagen bereitzustellen. Insbesondere kann dabei durch die Verstellung eines Ablageelementes ein Ablagebereich von einer ersten zu einer zweiten Werkstückablage umgestellt werden. Bevorzugt erfolgt die Verstellung des Ablageelementes dann in Abhängigkeit von der Greifposition des Werkstücks.

Alternativ oder zusätzlich kann das verfahrbare Ablageelement eine Verstellanordnung zur Verfügung stellen, welche wie oben beschrieben ein Werkstück nach dem Ablegen auf der Zwischenstation in eine Aufnahmeposition verfährt.

Alternativ oder zusätzlich kann durch das Verfahren des Ablageelementes ein Greifpunkt am Werkstück freigegeben werden, mit welchem das Werkstück dann von der Zwischenstation abgenommen werden kann.

Die Zwischenstation kann erfindungsgemäß mindestens ein Nest, in welches ein Werkstück hineingelegt werden kann, und mindestens einen Pin, auf welchem ein Werkstück aufgelegt werden kann, aufweisen. Insbesondere kann das Nest dabei Seitenwände und Ablagepunkte aufweisen, wobei die Seitenwände die Umfangskontur des Werkstückes zumindest teilweise umgeben. Insbesondere können die Seitenwände dabei schräg ausgerichtet sein, um so eine Zentrierung des Werkstücks im Nest zu erlauben. Der Pin ist bevorzugt so ausgestaltet, dass das Werkstück mit einer Aussparung und / oder Innenkontur auf den Pin aufgesetzt werden kann. Gegebenenfalls kann das Auflegen dabei auch auf mehrere Pins erfolgen, welche demgemäß eine Werkstückablage bilden.

Die Zwischenstation kann auch mehrere unterschiedliche Nester und/oder mehrere unterschiedliche, durch Pins gebildete Werkstück-Ablagen umfassen.

Weiterhin können mehrere identische Nester und/oder mehrere identische Pins vorgesehen sein. Hierdurch kann eine Pufferfunktion der Zwischenstation zur Verfügung gestellt werden.

Durch den Einsatz der Zwischenstation als Puffer kann ein Optimieren der Taktzeiten erfolgen, da je nach vorhanden Greifpositionen an einem Werkstück und vordefinierten Ablagepositionen die Taktzeit des Griffs in den Behälter variieren kann und die Aufnahme und Positionierung in eine vordefinierten Endabage schneller sein kann, als die Behälterentnahme. Die Taktzeiten müssen dann aufeinander abgestimmt sein und die erfindungsgemäß ausgestaltete Zwischenstation kann hier als Puffer fungieren und einen Stillstand der Anlage oder ein Warten der einzelnen Operationen aufeinander verhindern.

Bevorzugt kann der mindestens eine Pin verfahrbar sein. Die Verfahrbarkeit eines solchen Pins kann insbesondere dazu eingesetzt werden, um unterschiedliche Werkstückablagen zur Verfügung zu stellen. Insbesondere kann dabei die Position eines ersten Pins gegenüber einem zweiten Pin veränderbar sein.

Alternativ oder zusätzlich kann die Verfahrbarkeit des Pins ein Anheben eines in ein Nest abgelegten Werkstücks auf dem Pin und / oder ein Absenken eines auf den Pin aufgelegten Werkstücks in ein Nest erlauben. Dies erlaubt es, trotz der Möglichkeit der Ablage auf dem Pin oder in das Nest durch ein entsprechendes Verfahrens des Pins nur eine Aufnahmeposition für diese zwei Ablagemöglichkeiten zur Verfügung zu stellen. Bevorzugt ist der Pin dabei unterhalb des Nestes angeordnet und kann durch einen Durchbruch im Bereich der Bodenfläche des Nests bewegt und mit dem Werkstück in Eingriff gebracht werden.

In einer bevorzugten Ausführungsform der vorliegenden Erfindung weist die Zwischenstation mindestens zwei Nester und / oder mindestens zwei Pins auf. Dabei können die beiden Pins bevorzugt gegeneinander verstellbar sein, um hierdurch zwei unterschiedliche Werkstückablagen bereitzustellen. Alternativ oder zusätzlich kann jedes der beiden Nester so über den oder die Pins verfahrbar sein, dass ein Anheben eines in das Nest ablegten Werkstücks oder ein Absenken eines auf den oder die Pins aufgelegten Werkstücks in das Nest erfolgen kann.

Vorteilhafterweise sind die Nester dabei auf einem Schlitten angeordnet, über welchen diese über den oder die Pins verfahren werden können. Weiterhin bevorzugt ist dabei ein Hubantriebvorgesehen, über welchen der oder die Pins gegenüber den Nestern oder untereinander verstellbar sind. Bevorzugt sind dabei zwei Hubantriebe, insbesondere Elektrik-, Pneumatik- oder Hydraulikzylinder vorgesehen, wobei der eine Hubantrieb ein Anheben der Pins gegenüber den Nestern erlaubt, der andere ein Verstellen der Positionen der Pins gegeneinander.

Bevorzugt erfolgt dabei ein Abnehmen der Werkstücke von der Zwischenstation ausschließlich aus einer Position, in welcher die Werkstücke auf den Pins aufliegen, oder ausschließlich aus einer Position, in welcher die Werkstücke in einem Nest liegen. Bevorzugt ist das Aufnehmen aus einer Position, in welcher die Werkstücke auf den Pins aufliegen, da das Aufliegen auf den Pins geringere Positionsabweichungen mit sich bringt.

Bevorzugt wird gemäß der vorliegenden Erfindung der Greifer zum Greifen der Werkstücke aus dem Behälter und / oder zum Aufnehmen von der Zwischenablage durch einen Greifarm bewegt. Sind dabei zwei separate Greifer vorgesehen, werden bevorzugt auch zwei separate Greifarme eingesetzt.

Vorteilhafterweise handelt es sich bei dem Greifarm um einen Roboterarm eines sechsachsigen Roboters. Alternativ kann es sich um ein an einem Flächen- oder Linearportal angeordneten Greifarm handeln.

Bevorzugt weist der Greifarm dabei ein Greifarmelement mit mindestens einer und bevorzugt zwei zusätzlichen Achsen auf. Bevorzugt sind der Greifarm und das Greifarmelement dabei so ausgestaltet, wie dies in der EP 2698234 A2 gezeigt ist.

Werden zwei separate Greifer zum Entnehmen der Werkstücke aus dem Behälter und zum Abnehmen von der Zwischenstation eingesetzt, so wird bevorzugt jedenfalls der Greifer zum Entnehmen der Werkstücke aus dem Behälter über einen Roboterarm oder ein Flächen- oder Linearportal bewegt, welcher bevorzugt wie oben dargestellt ein Greifarmelement mit einer oder bevorzugt zwei zusätzlichen Achsen aufweist.

In einer möglichen Ausführungsform kann auch der zweite, zum Abnehmen der Werkstücke von der Zwischenstation eingesetzte Greifer über einen solchen Greifarm bewegt werden.

Allerdings sind die Greifaufgaben für den zweiten, zum Abnehmen eingesetzten Greifer bei weitem nicht so komplex wie jene für das Greifen aus dem Behälter. Daher kann der Greifer zum Abnehmen der Werkstücke von der Zwischenstation auch durch einen einfachen Übersetzer mit nur einer oder zwei linearen oder rotatorischen Achsen bewegt werden. Alternativ ist auch der Einsatz eines Roboterarms, insbesondere eines sechsachsigen Roboters, denkbar, jedoch ohne ein Greifarmelement mit zusätzlichen Achsen.

Bevorzugt weist die erfindungsgemäße Vorrichtung eine Steuerung auf, durch welche die oben beschriebenen Vorgehensweisen und Schritte automatisch durchgeführt werden. Wurde dabei im Hinblick auf die Ausgestaltung der Vorrichtung dargelegt, dass diese zu einer bestimmten Betriebsweise eingesetzt werden kann, so ist bevorzugt eine Steuerung vorgesehen, über welche diese Betriebsweise automatisch implementiert wird.

Die Vorrichtung kann dabei eine erste Steuerungskomponente aufweisen, durch welche die Ansteuerung des Greifers beim Entnehmen der Werkstücke aus dem Behälter und beim Ablegen auf der Zwischenablage erfolgt, und/oder eine zweite Steuerungskomponente, über welche die Ansteuerung des Greifers beim Aufnehmen von der Zwischenablage und beim Ablegen auf der Ziel-Ablage erfolgt.

Die erste Steuerungskomponente berechnet dabei bevorzugt die Bewegung des Greifers in Abhängigkeit von dem gewählten Greifpunkt und/oder der für das Ablegen auf der Zwischenstation vorgesehenen Werkstückablage. Die Berechnung kann dabei zumindest teilweise oder komplett in einem Zeitraum nach dem Griff des Werkstücks im Behälter erfolgen, und während der Greifer mit dem Werkstück bereits in Richtung auf die Zwischenstation bewegt wird.

Dabei kann die erste Steuerungskomponente den Greifer nach dem Aufnehmen eines Werkstücks aus dem Behälter in Richtung auf oder an eine vordefinierte Übergabeposition bewegen, von welcher aus die weitere Bewegung des Greifers zur Ablage auf der Zwischenstation erfolgt. Hierdurch muss beim Griff im Behälter noch nicht der komplette Weg des Greifers bis zur Ablage auf der Zwischenstation bekannt sein. Vielmehr kann die Bewegung des Greifers von der Übergabeposition zur Ablage auf der Zwischenstation berechnet werden, während sich der Greifer von der Aufnahme des Werkstücks im Behälter zur Übergabeposition bewegt. Ggf. kann der Weg dabei auch in mehrere Bereiche aufgeteilt werden und dementsprechend mehrere Übergabepositionen vorgesehen sein.Ziel-Ablage

Die erste Steuerungskomponente kann dabei aus einem passiven und einem aktiven Steuerungsteil bestehen, wobei durch den passiven Steuerungsteil eine Bahnplanung für die Bewegung des Greifers insbesondere in Abhängigkeit von der Greifposition erfolgt, während der aktive Steuerungsteil die Kinematik zum Bewegen des Greifers und insbesondere einen hierzu eingesetzten Roboterarm anhand der Bahnplanung ansteuert.

Die zweite Steuerungskomponente bewegt den Greifer dagegen bevorzugt auf einer oder mehreren vordefinierten und in der Steuerung abgespeicherten Bahnen.

Weiterhin kann vorgesehen sein, dass die erste Steuerungskomponente den Greifer je nach Greifpunkt und/oder Greifqualität auch bis zur direkten Ablage des Werkstücks auf der Ziel-Ablage ansteuert, so dass für ein solches Werkstück die zweite Steuerungskomponente nicht zum Einsatz käme. Vorteilhafterweise können auch hier eine oder mehrere vordefinierte Übergabepositionen innerhalb des Bewegungsablaufs vorgesehen sein.

Neben der erfindungsgemäßen Vorrichtung umfasst die vorliegende Erfindung weiterhin ein Verfahren zum automatisierten Entnehmen von in einem Behälter angeordneten Werkstücken. Das Verfahren umfasst dabei die Schritte:
- Erfassen der Werkstücke,
- Greifen mindestens eines Werkstückes mit einem Greifer,
- Entnehmen des Werkstücks aus dem Behälter,
- Ablegen des Werkstücks auf einer Zwischenstation und
- Greifen des Werkstücks mit einem Greifer und Aufnehmen des Werkstücks von der Zwischenstation.

Erfindungsgemäß ist dabei vorgesehen, dass das Werkstück nach dem Entnehmen aus dem Behälter in einer von mindestens zwei unterschiedlichen, definierten Ablagepositionen des Werkstücks auf der Zwischenstation abgelegt wird. Insbesondere kann dabei die Ablageposition, mit welcher die Werkstücke auf der Zwischenstation abgelegt werden, in Abhängigkeit von einer Greifposition des Greifers beim Greifen des Werkstücks im Behälter gewählt werden. Bevorzugt sind dabei zum Greifen des Werkstücks im Behälter mehr Greifpositionen zulässig als beim Greifen des Werkstücks von der Zwischenablage.

Bevorzugt wird das Werkstück von der Zwischenablage in einer Ziel-Ablage positioniert. Hierbei kann es sich beispielsweise um eine Transportstrecke, ein Speicher, ein Nest oder die Aufnahme einer Bearbeitungsmaschine handeln. Als Endaufnahme kann dabei beispielsweise auch ein Band ohne spezifisch vordefinierte Aufnahmebereiche eingesetzt werden, wobei in diesem Fall die Werkstücke bevorzugt in einem vorgegebenen Muster auf dem Band abgelegt werden.

Bevorzugt erfolgt das erfindungsgemäße Verfahren dabei so, wie dies oben bereits im Hinblick auf die erfindungsgemäße Vorrichtung dargestellt wurde. Weiterhin bevorzugt erfolgt das erfindungsgemäße Verfahren dabei unter Verwendung der erfindungsgemäßen Vorrichtung.

Die vorliegende Erfindung wird nun anhand eines Ausführungsbeispiels sowie Zeichnungen näher dargestellt.

Dabei zeigen:
- Fig. 1:: eine Schemazeichnung eines Ausführungsbeispiels einer erfindungsgemäßen Vorrichtung zum automatisierten Entnehmen von in einem Behälter angeordneten Werkstücken,
- Fig. 2:: ein Ausführungsbeispiel eines Werkstückes, welches durch die erfindungsgemäße Vorrichtung gehandhabt wird, mit den möglichen Greifpositionen,
- Fig. 3:: ein Ausführungsbeispiel einer erfindungsgemäß eingesetzten Zwischenstation,
- Fig. 4:: das in Fig. 3 gezeigte Ausführungsbeispiel mit in einer anderen Position gestellten Ablageelementen,
- Fig. 5:: ein alternatives Ausführungsbeispiel für Werkstückablagen gemäß der vorliegenden Erfindung in drei unterschiedlichen Positionen der Ablageelemente,
- Fig. 6:: die in Fig. 5 links gezeigte Ablageposition für das Ablegen seitlich gegriffener Werkstücke,
- Fig. 7:: die in Fig. 5 mittig gezeigte Ablageposition für das Ablegen von unten, d.h. der Seite B gegriffener Werkstücke, und
- Fig. 8:: die in Fig. 5 rechts gezeigte Ablageposition für das Ablegen von oben, d.h. der Seite A gegriffener Werkstücke.

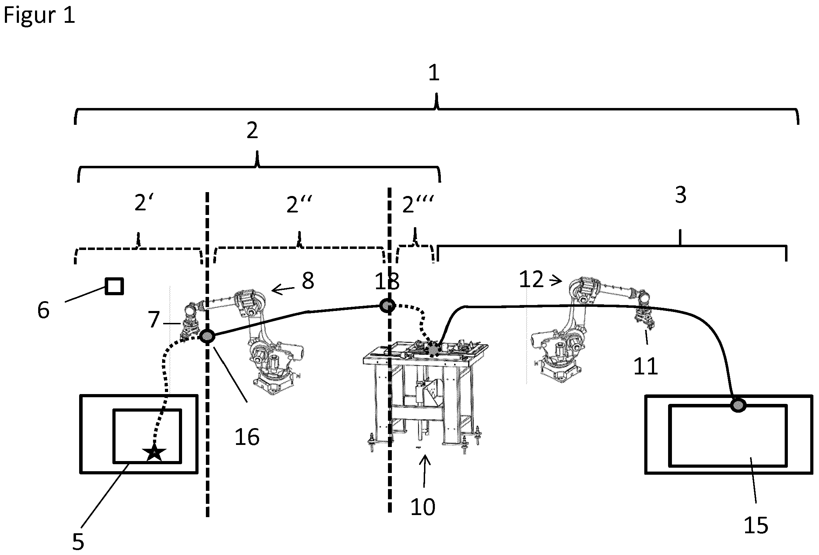

Fig. 1 zeigt ein Ausführungsbeispiel einer erfindungsgemäßen Vorrichtung zum Entnehmen von Werkstücken aus einem Behälter 5. Insbesondere können die Werkstücke dabei in dem Behälter 5 ungeordnet angeordnet sein.

Dabei ist eine Erfassungseinheit 6 vorgesehen, welche die im Behälter befindlichen Werkstücke erfasst. Insbesondere kann es sich dabei um einen Laserscanner, insbesondere um einen 3-D-Laserscanner handeln. Die Erfassungseinheit ist oberhalb des Behälters angeordnet und sieht so in diesen hinein. Erfindungsgemäß ist dabei eine Steuerungskomponente 2 vorgesehen, welche die von der Erfassungseinheit 2 generierten Daten auswertet. Dabei werden die im Behälter befindlichen Werkstücke identifiziert und ein zum Greifen geeignetes Werkstück ausgewählt. Anhand der Positionsdaten des ausgewählten Werkstücks erfolgt dann eine Bahnplanung für die Bewegungsbahn des Greifers 7.

Der Greifer 7 wird dabei bei dem in Fig. 1 gezeigten Ausführungsbeispiel über einen Industrieroboter 8 bewegt, dessen Roboterarm sechs Achsen aufweist. Gegebenenfalls kann dabei am Ende des Roboterarms zusätzlich ein Greifarmelement angeordnet sein, welches zwei weitere Bewegungsachsen aufweist. Das Greifarmelement kann dabei insbesondere so ausgestaltet sein, wie dies aus der EP 2698234 A2 bekannt ist.

Unabhängig von der Frage der Bewegung des Greifers ist dieser bevorzugt als ein mechanischer Greifer ausgestaltet, insbesondere als ein Finger- oder Backengreifer. Im Ausführungsbeispiel kommt dabei ein Zwei-Fingergreifer zum Einsatz. Der erfindungsgemäß eingesetzte mechanische Greifer erlaubt dabei ein genaueres Greifen der Werkstücke.

Die erfindungsgemäße Vorrichtung umfasst weiterhin eine Zwischenstation 10, auf welcher die vom Greifer 7 gegriffenen und aus dem Behälter 5 entnommenen Werkstücke abgelegt werden. Weiterhin ist ein Greifer 11 vorgesehen, über welchen die Werkstücke auf der Zwischenstation gegriffen und von dieser abgenommen werden, um an der Ziel-Ablage 15 abgelegt zu werden.

Die Ansteuerung beim Entnehmen der Werkstücke aus dem Behälter 5 und beim Ablegen auf der Zwischenablage erfolgt über eine erste Steuerungskomponente 2, und bei der Aufnahme von der Zwischenablage 10 und dem Ablegen auf der Ziel-Ablage 15 durch eine zweite Steuerungskomponente 3.

Dabei können Übergabepositionen 16 und 18 definiert sein, welche unterschiedliche Ansteuerungs-Bereiche innerhalb der Bewegung, für welche die zweite Steuerungskomponente 2 zuständig ist, voneinander trennen. Zur Ansteuerung innerhalb dieser Ansteuerungs-Bereiche kann die Steuerungskomponente 2 entsprechende Unterroutinen 2', 2" und 2‴ aufweisen. Insbesondere kann dabei die Unterroutine 2', welche für den Griff im Behälter 5 und die Entnahme der Werkstücke verantwortlich ist, den Greifer in eine vordefinierte Übergabeposition 16 bewegen. Von dort aus übernimmt die Unterkomponente 2", welche den Greifer auf einer vordefinierten Bahn zur zweiten Übergabeposition 18 bewegt. Hier übernimmt die Unterkomponente 2"', welche für das Ablegen auf der Zwischenstation zuständig ist, die Ansteuerung des Greifers 7. Hierdurch können die Bewegungsabläufe innerhalb der drei Ansteuerungsbereiche unabhängig voneinander berechnet werden. Insbesondere kann die Bewegung zum Übergabepunkt 16 schon erfolgen, während die Bewegung vom Übergabepunkt 18 zur Zwischenstation noch berechnet wird.

Ein Teil der ersten Steuerungskomponente fährt damit das Werkstück an und greift. Dabei gibt es einen theoretischen Übergabepunkt innerhalb der Steuerung. Das Werkstück ist gegriffen, aber jetzt weiß die Steuerung noch nicht, wo dieses abgelegt werden kann. Diese Berechnung passiert erst jetzt. Dabei wird ein Zielpunkt auf der Zwischenablage vorgegeben und eine entsprechende Bahnplanung erzeugt.

Die Vorgabe des Zielpunkts auf der Zwischenablage und die entsprechende Bahnplanung erfolgen in einer passiven Steuerungseinheit. Insbesondere erfolgt dabei ein Einbeziehen von möglichen Ablagepunkten aufgrund der Griffposition mittels einer hinterlegten Tabelle. Die aktive Robotersteuerung fährt die durch die passive Steuerungseinheit vorgegebene Bahn dann ab.

Die Übergeordnete Steuerungskomponente 2 beinhaltet damit eine passive und eine aktive Steuerung. Die Passive errechnet die genauen Griffpunkte und Zielpunkte und berechnet daraus auch die Bahnplanung und die aktive stellt die eigentliche Robotersteuerung mit ihren Kontrollaufgaben dar und fährt die Vorgaben aus dem passiven Part einfach ab.

Die zweite Steuerungskomponente 3 ist für die Abnahme von der Zwischenstation über den Greifer 11 verantwortlich, sowie zum Ablegen auf einer Ziel-Ablage. Die Ansteuerung erfolgt hier, da die Aufnahmeposition und die Ziel-Ablageposition vorgegeben sind, anhand eines vordefinierten Bewegungsablaufs. Ggf. kann dabei in Abhängigkeit von der Werkstück-Ablage, von welcher das Werkstück abgenommen wird, einer aus einer Mehrzahl an vordefinierten Bewegungsabläufen herangezogen werden. Gleiches gilt, wenn mehrere Ziel-Ablagen bedient werden. Die zweite Steuerungskomponente macht damit lediglich ein Pick and Place von der Zwischenstation auf die Ziel-Ablage, da sie mit einem oder mehren fest vorgegebenen Greifpunkten auf der Zwischenstation arbeitet.

Wenn bei einem optimalen Griff in der Kiste bezüglich einer Ziel-Ablage ein direktes Ablegen möglich ist, übernimmt die erste Steuerungskomponente die Ansteuerung komplett und legt auch ab. Die zweite Steuerungskomponente kommt in diesem Fall nicht zum Einsatz.

Die Steuerungskomponenten 2 und 3 sind dabei in einer übergeordneten Steuerung 1 integriert. Selbstverständlich sind jedoch auch andere Aufteilungen der einzelnen Steuerungskomponenten und Steuerungsaufgaben denkbar.

Im in Fig. 1 gezeigten Ausführungsbeispiel wird zum Abnehmen der Werkstücke von der Zwischenablage 10 ein separater Greifer 11 eingesetzt, welcher über einen separaten Greifarm 12 bewegt wird. Im Ausführungsbeispiel wird dabei zum Bewegen des zweiten Greifers 11 ebenfalls ein Industrieroboter mit sechs Achsen eingesetzt. Der Einsatz eines zusätzlichen Greifarmelementes mit zusätzlichen Achsen ist hier in der Regel jedoch nicht notwendig. Alternativ zu einem Industrieroboter könnte auch ein einfacher Übersetzer mit nur einer oder zwei linearen oder rotatorischen Freiheitsgraden eingesetzt werden.

Alternativ zu der in Fig. 1 gezeigten Ausführungsform könnte auch der gleiche Greifer 7, welcher zum Entnehmen der Werkstücke aus dem Behälter 5 eingesetzt wird, zum Greifen und Abnehmen der Werkstücke von der Zwischenstation 10 eingesetzt werden. Die Verwendung von zwei getrennten Greifern verringert jedoch die Taktzeiten, da in dem Zeitraum, in welchem das Abnehmen eines Werkstücks von der Zwischenstation erfolgt, bereits ein neues Werkstück aus dem Behälter gegriffen werden kann.

Bei der in Fig. 1 nur schematisch eingezeichneten Ziel-Ablage 15 kann es sich beispielsweise um ein Nest handeln, in welches die Werkstücke abgelegt werden, bzw. eine Vielzahl beispielsweise auf einer Transporteinrichtung angeordneter Nester. Alternativ können die Werkstücke beispielsweise auch in einem vorgegebenen Muster auf einer Transporteinrichtung, beispielsweise einem Band, abgelegt werden. Weiterhin kann es sich bei der Ziel-Ablage um einen Speicher oder die Aufnahme einer Bearbeitungsmaschine handeln.

Die Zwischenstation 10 gemäß der vorliegenden Erfindung erlaubt es dabei, die Werkstücke im Behälter 5 mit einer möglichst großen Anzahl von zulässigen Greifpunkten zu greifen, und dennoch ein genaues Ablegen der Werkstücke in einer fest vorgegebenen Position und / oder Ausrichtung in der Ziel-Ablage 15 zu ermöglichen. Insbesondere können die Werkstücke dabei im Behälter 5 mit Greifpositionen gegriffen werden, welche eine solche definierte Ablage in einer vorgegebenen Position und / oder Ausrichtung in der Ziel-Ablage 15 nicht erlauben würden.

Hierfür weist die Zwischenstation mindestens zwei unterschiedliche Werkstückablagen zum Ablegen des Werkstücks in mindestens zwei unterschiedlichen, definierten Ablagepositionen auf. Hierdurch werden die Werkstücke zum einen in fest definierten Positionen auf der Zwischenablage abgelegt, sodass sie ohne eine weitere Objekterfassung von der Zwischenstation abgenommen werden können. Die Zwischenstation bietet jedoch nicht nur eine fest definierte Ablagemöglichkeit, wie dies üblicherweise bei der Endabnahme der Fall ist, sondern mindestens zwei solcher Ablagemöglichkeiten. Weiterhin bevorzugt bietet die Zwischenstation dabei mindestens drei, weiterhin bevorzugt mindestens vier solcher alternativer, definierter Ablagepositionen und dementsprechend mindestens drei und weiterhin vorteilhafterweise mindestens vier unterschiedliche Werkstückablagen.

Durch die mehreren Ablagemöglichkeiten auf der Zwischenstation können die Werkstücke im Behälter 5 mit mehr zulässigen Greifpositionen gegriffen werden, als wenn nur eine definierte Ablagemöglichkeit vorhanden wäre. Das Greifen und Aufnehmen der Zwischenstücke von der Zwischenstation erfolgt dann bevorzugt mit nur einer oder zwei definierten Greifpositionen, sodass die Werkstücke an der Ziel-Ablage in nur einer fest vorgegebenen Ablageposition und / oder -ausrichtung abgelegt werden können.

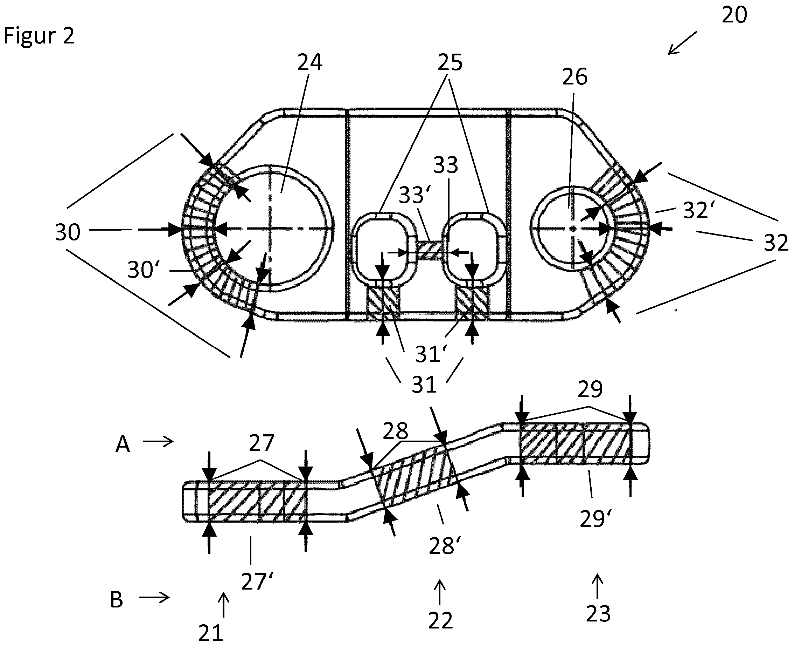

In Fig. 2 ist dabei ein Ausführungsbeispiel eines beispielhaften Werkstückes 20 in einer Seitenansicht und in einer Draufsicht dargestellt. An diesem beispielhaften Werkstück sollen die möglichen Greifpositionen eines Greifers am Werkstück näher verdeutlicht werden. Die möglichen Greifpositionen werden dabei zum einen durch die Geometrie des Werkstücks bedingt, und zum anderen durch die Ausgestaltung des Greifelementes.

Das in Fig. 2 dargestellte beispielhafte Werkstück 20 weist dabei eine langgestreckte, flache Form mit einem linken Bereich 21, einem mittleren Bereich 22 und einem rechten Bereich 23 auf, welche in sich eben ausgestaltet sind und über Abwinkelungen miteinander in Verbindung stehen. Weiterhin weist das Werkstück Durchbrüche 24 bis 26 auf. Das Werkstück kann nun seitlich oder frontal über einen Fingergreifer gegriffen werden, welcher an der Ober- und Unterseite des Werkstücks im Bereich der ebenen Bereiche 21 bis 23 angreift. Hier sind die möglichen Greifpositionen 27 bis 29 dargestellt. Bei diesen Greifpositionen 27 bis 29 handelt es sich hier jedoch nicht um singuläre Greifpunkte, sondern um Greifbereiche 27' bis 29', welche sich um die bzw. zwischen den zulässigen Greifpunkten erstrecken.

Von oben bzw. unten kann das Werkstück gegriffen werden, indem einer der Greiffinger des Greifers in die Durchbrüche 24 bis 26 des Werkstücks eingreift, während der andere am Außenumfang angreift. Hier ergeben sich Greifpositionen 30 bis 32, welche wiederum zu Greifbereichen 30' bis 32' erweitert sind. Eine Greifpositionen, bei welcher beide Finger durch die Durchbrüche 24 bis 26 hindurchgehen, ist mit der Greifposition 33 bzw. dem Greifbereich 33' gegeben.

Die Vorrichtung gemäß der vorliegenden Erfindung ist nun so ausgestaltet, dass beim Griff der Werkstücke aus dem Behälter 5 ein Großteil der oder alle Greifpositionen, welche im Hinblick auf die Geometrie des Werkstücks und die Ausgestaltung des Greifers möglich sind, auch als zulässige Greifposition in der Steuerung hinterlegt sind. Hierdurch stehen zum Greifen der Werkstücke im Behälter eine Mehrzahl an Greifpositionen zur Verfügung, sodass im Allgemeinen immer mindestens ein Werkstück so im Behälter liegt, dass dieses auch tatsächlich mit einer zulässigen Greifposition gegriffen werden kann. Insbesondere erlaubt dieses Vorgehen dabei ein 100 %iges Entleeren des Behälters.

Aufgrund der Mehrzahl von Greifpositionen, mit welchen das Werkstück im Behälter gegriffen werden kann, ist jedoch ein unmittelbares Ablegen der Werkstücke in nur einer einzigen vordefinierten Ausrichtung und / oder Position an der Ziel-Ablage nicht oder zumindest nicht in jedem Fall unmittelbar möglich. Durch die von der Zwischenstation zur Verfügung gestellten mindestens zwei unterschiedlichen, definierten Ablagepositionen ist jedoch sichergestellt, dass ein im Behälter gegriffenes Werkstück auch tatsächlich auf der Zwischenablage definiert abgelegt werden kann. Dabei erfolgt die Auswahl der zum Ablegen genutzten Werkstückablagen der Zwischenstation in Abhängigkeit von der zum Greifen genutzten Greifposition.

Bevorzugt ist dabei in der Steuerung 3 eine Zuordnung zwischen den möglichen Greifpositionen des Werkstücks beim Griff im Behälter und den nutzbaren Werkstückablagen auf der Zwischenstation abgelegt. Insbesondere kann dies in Form einer Tabelle erfolgen, welche den Greifpositionen 27 bis 32 und 30 bis 32 entsprechende Werkstückablagen zuordnet. Die Tabelle ist dabei bevorzugt in der ersten Steuerungskomponente 2 abgelegt, und insbesondere im passiven Teil dieser Steuerungskomponente.

Allerdings handelt es sich, wie anhand von Figur 2 veranschaulicht, bei den zulässigen Greifpositionen nicht notwendigerweise um singuläre Punkte, sodass allein durch die Zuordnung der zulässigen Greifbereiche zu gewissen Werkstückablagen nicht ausgeschlossen werden kann, dass es dennoch zu Kollisionen kommt. Die zulässigen Greifbereiche können dabei insbesondere über ein Off-Set gegenüber einer zulässigen, innerhalb des Bereiches angeordneten Greifposition definiert sein.

Um sicherzustellen, dass ein kollisionsfreies Ablegen eines Werkstücks auf der Zwischenstation möglich ist, umfasst das Ausführungsbeispiel der erfindungsgemäßen Steuerung 3 daher ein Kollisionsbetrachtungsmodul. Dieses enthält ein 3-D-Modell des Greifers, des Werkstücks sowie der Zwischenablage, und berechnet anhand der konkreten Greifposition, d. h. im Ausführungsbeispiel anhand des Off-Sets von einem vorgegebenen Greifpunkt, ob ein kollisionsfreies Ablegen des Werkstückes auf der diesem Greifpunkt zugeordneten Zwischenablage möglich ist.

Ergibt die Kollisionsbetrachtung, dass ein solches kollisionsfreies Ablegen nicht möglich ist, wird das Werkstück wieder in den Behälter 5 abgelegt und erneut gegriffen.

Die erfindungsgemäße Kollisionsbetrachtung erfolgt dabei bevorzugt live während das gegriffene Werkstück über den Greifer 7 aus dem Behälter entnommen wird. Hierdurch wird Zykluszeit gespart, da die Berechnung nicht bereits vor dem Greifen vorliegen muss.

Weiterhin kann die Zwischenstation einen nicht gezeigten Sensor aufweisen, welcher die Greifposition des Greifers nach dem Greifen im Behälter 5 und vor dem Ablegen auf der Zwischenposition ermittelt. Hierdurch kann eine Veränderung in der beim Greifen im Behälter beabsichtigten Greifposition erkannt werden, welche bspw. durch ein Verrutschen des Werkstücks am Greifer bedingt sein kann. Wird ein solcher Sensor eingesetzt, erfolgt die Auswahl der Werkstückablage auf der Zwischenstation und/oder die Kollisionsprüfung auf Grundlage der vom Sensor ermittelten Greifposition. Hierdurch könnte die Kollisionsbetrachtung mit noch genaueren Daten durchgeführt werden. Als Sensor kann beispielsweise eine Kamera oder ein Laserabstandssensor eingesetzt werden.

Dabei kann vorgesehen sein, dass vor dem Ablegen der Werkstücke auf der Zwischenstation die am Greifer aufgenommen Werkstücke in den Bereich des Sensors verfahren werden, um die genaue Position des Werkstückes am Greifer zu ermitteln. Alternativ könnte hierfür auch ein am Greifer selbst angeordneter Sensor eingesetzt werden oder ein Sensor zwischen Behälter und Zwischenablage angeordnet werden.

Im Hinblick auf die Auslegung von Greifer, Zwischenstation und Steuerung wird dabei wie folgt vorgegangen:
Zunächst wird die maximal mögliche Anzahl der Greifpunkte anhand des zu greifenden Werkstücks festgelegt. Hieraus erfolgt die Greiferauslegung, d.h. die spezifische Ausgestaltung des Greifers

Auf Grundlage der Greifpunkte werden die Funktionen, die die Zwischenstation bereitstellen muss, definiert. Dies sind zum einen die Anzahl und der Aufbau der Werkstück-Ablagen, zum anderen Funktionen zum Bereitstellen anderer Greifpunkte für die Werkstücke auf der Zwischenstation, wie bspw. das Drehen, Schwenken, Zustellen von Werkstücken und/oder Werkstück-Ablagen.

Im Hinblick auf die Auslegung der Steuerung werden bevorzugte Greifpunkte definiert, insbesondere anhand der mechanischen Eigenschaften wie Stabilität im Greifer, und/oder der Zykluszeit und der Situation auf der Zwischenstation. Diese Greifpunkte werden beim Griff im Behälter bevorzugt herangezogen. Wenn das Werkstück über einen bevorzugten Greifpunkt gegriffen werden kann, ist dabei eventuell eine Umgehung der Zwischenstation möglich.

Weiterhin werden Ersatzgreifpunkte bzw. Greifbereiche definiert, welche eingesetzt werden, wenn kein Werkstück mit einem bevorzugten Greifpunkt gegriffen werden kann. Entsprechend wird eine Strategie zur Teilehandhabung erstellt, und insbesondere die Zuordnung zwischen Greifpunkten und der Ablage und Handhabung auf der Zwischenstation definiert.

Die Kategorie der Greifpunkte hat dabei Einfluss auf die Auslegung der Greifer und die konstruktive Gestaltung der Zwischenstation

Dabei können mehrere identische Nester und/oder mehrere identische Pins vorgesehen sein. Hierdurch kann eine Pufferfunktion der Zwischenstation zur Verfügung gestellt werden. Beispielsweise können mehrere Zwischenstationen, wie sie in den Zeichnungen gezeigt sind, zu einer größeren Zwischenstation kombiniert werden. Durch den Einsatz der Zwischenstation als Puffer kann ein Optimieren der Taktzeiten erfolgen, da je nach vorhanden Greifpositionen an einem Werkstück und vordefinierten Ablagepositionen die Taktzeit des Griff in den Behälter variieren kann und die Aufnahme und Positionierung in eine vordefinierten Endalage schneller sein kann, als die Behälterentnahme. Die Taktzeiten müssen dann aufeinander abgestimmt sein und die erfindungsgemäß ausgestaltete Zwischenstation kann hier als Puffer fungieren und einen Stillstand der Anlage oder ein Warten der einzelnen Operationen aufeinander verhindern.

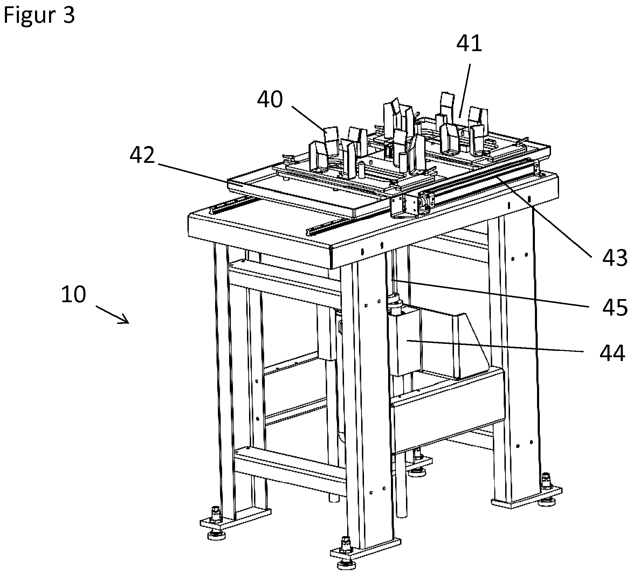

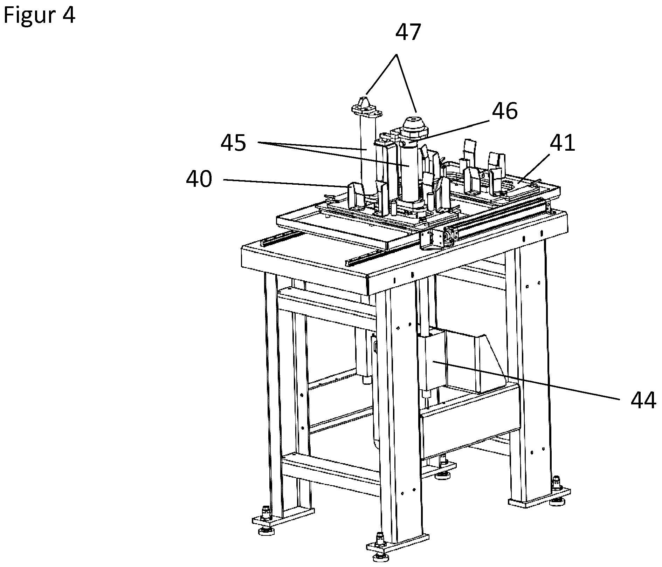

Ein erstes Ausführungsbeispiel einer erfindungsgemäß eingesetzten Zwischenstation ist in Fig. 3 und 4 näher dargestellt. Das Ausführungsbeispiel weist dabei zum einen zwei unterschiedliche Nester 40 und 41 auf. Diese dienen dazu, Werkstücke, welche von der Ober- oder Unterseite gegriffen wurden, aufzunehmen. Die zwei unterschiedlichen Nester sind dabei deshalb erforderlich, weil die Oberseite A des Werkstückes anders gestaltet ist als die Unterseite B des Werkstückes. Je nachdem, ob das Werkstück nun von seiner Oberseite A oder seiner Unterseite B gegriffen wurde, wird es daher entweder in das Nest 40 oder 41 abgelegt.

Werden die Werkstücke jedoch seitlich oder frontal gegriffen, so ist ein Ablegen in die Nester 40 oder 41 nicht möglich, da der Greifer ansonsten mit dem Nest kollidieren würde. Daher weist die Zwischenstation zwei Pins 45 auf, auf welchen ein Werkstück abgelegt werden kann. Die Pins 45 greifen dabei mit ihren Spitzen 47 in die Durchbrüche des Werkstückes und erlauben damit ebenfalls ein präzises Ablegen der Werkstücke.

Im Ausführungsbeispiel sind die beiden Pins 45 durch ein Verstellelement 46, im Ausführungsbeispiel ein Hydraulik- oder Pneumatikzylinder, in ihrer Höhe gegeneinander verstellbar. Hierdurch werden durch die Verstellung der Pins gegeneinander zwei unterschiedliche Werkstückablagen zur Verfügung gestellt, wobei die eine Verstellposition der Pins dem Ablegen mit der Oberseite A, die andere dem Ablegen mit der Unterseite B eingesetzt wird.

Die in Fig. 3 und 4 dargestellte Werkstückablage erlaubt damit das Ablegen der Werkstücke in 4 definierten Ablagepositionen. Die Zuordnung zu den Greifbereichen erfolgt dabei dergestalt, dass je nachdem, ob die Werkstücke von oben oder unten oder seitlich oder frontal gegriffen werden, eine Ablage in den Nestern oder auf den Pins erfolgt. Je nachdem, mit welcher Ausrichtung zwischen Greifer und Ober- und Unterseite das Greifen erfolgt, erfolgt dann die Auswahl zwischen den zwei Nestern bzw. den durch die Pins bereitgestellten zwei Werkstückablagen.

Die erfindungsgemäße Zwischenablage ist dabei so ausgestaltet, dass durch Bewegen der Ablageelemente ein Wechsel in der Ablageposition eines auf der Zwischenablage abgelegten Werkstücks möglich ist. Hierdurch wird sichergestellt, dass die auf der Zwischenablage abgelegten Werkstücke mit einer geringeren Anzahl an zulässigen Greifpositionen von der Zwischenstation gegriffen werden können, und bevorzugt mit nur einer oder zwei zulässigen Greifpositionen.

Im Ausführungsbeispiel sind die Pins 45 und die Nester 40 dabei so gestaltet, dass die Pins über eine Verfahranordnung 44 durch die Bodenseite der Nester hindurch geschoben werden können, und so ein im Nest abgelegtes Werkstück anheben können. Im Ausführungsbeispiel erfolgt das Abnehmen der Werkstücke von der Zwischenstation dabei immer in der auf den Pins aufgelegten Position, da sich hierdurch eine noch größere Genauigkeit erreichen lässt, als bei der Positionierung in den Nestern. Jedoch wäre alternativ auch denkbar, die auf den Pins abgelegten Werkstücke in die Nester abzusenken, und ein Abnehmen nur aus den Nestern vorzunehmen.

Um ein Anheben der Werkstücke aus den beiden Nestern 40 und 41 zu ermöglichen, sind diese dabei auf einem Schlitten 42 angeordnet, welcher über eine Verfahranordnung 43 auf der Zwischenstation verfahrbar ist. Hierdurch kann jedes der beiden Nester 40 und 41 über die Pins 45 gefahren werden. Die Nester 40 und 41 weisen dabei seitliche Anschlagbereiche auf, über welche die Werkstücke beim Legen in die Nester in eine fest vorgegebene Position geführt werden. Der Bodenbereich der Nester ist dagegen ausgespart, sodass die Pins 45 durch diesen hindurchgeführt werden können.

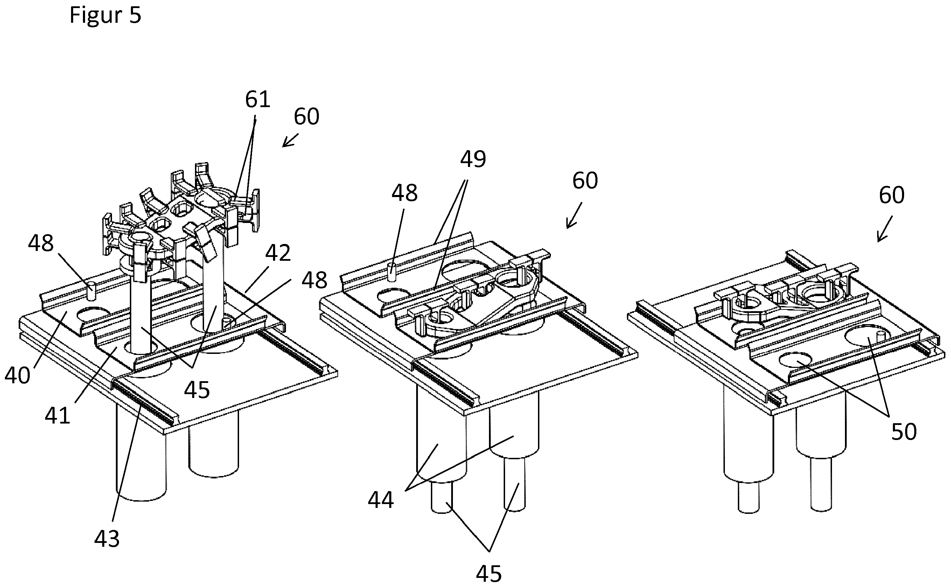

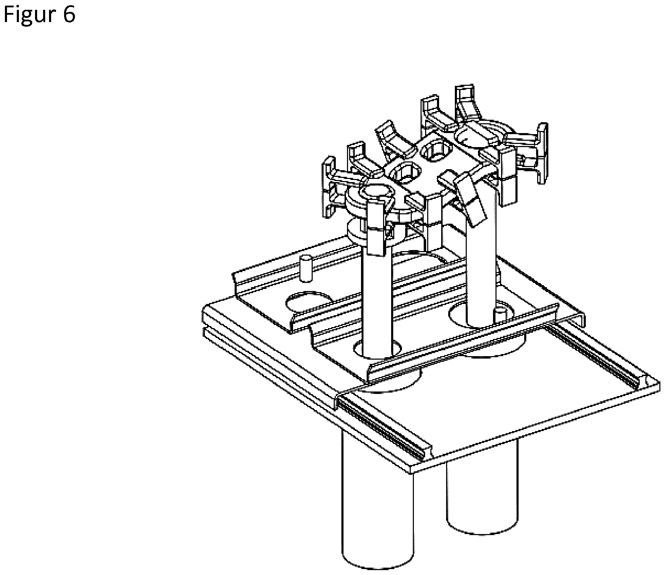

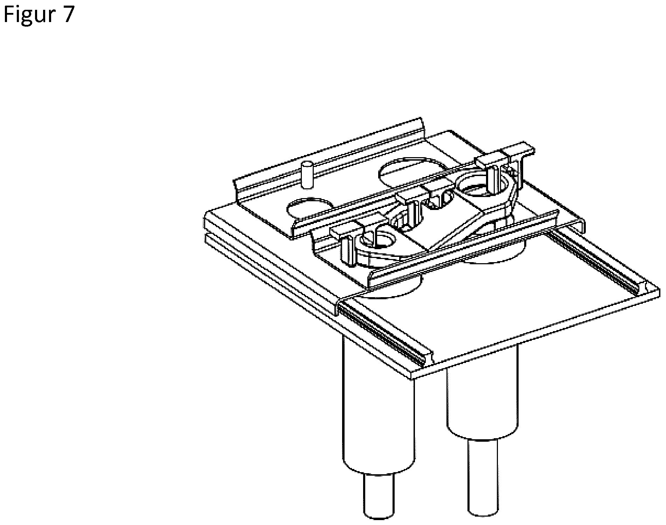

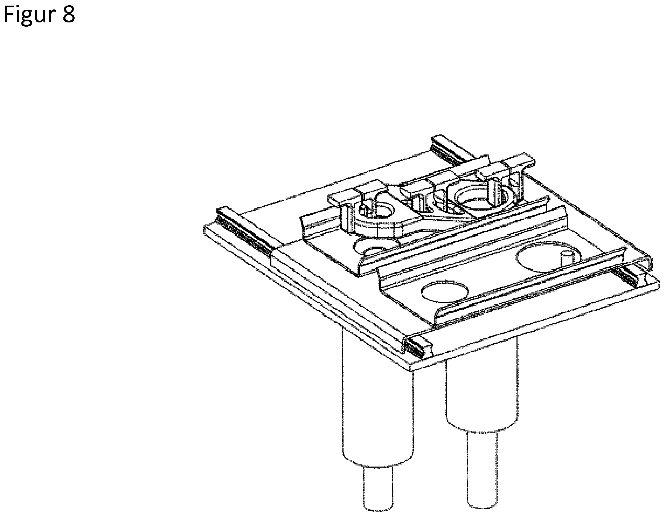

In Figur 5 ist ein weiteres, geringfügig geändertes Ausführungsbeispiel der auf der Zwischenstation eingesetzten Werkstückablagen in drei unterschiedlichen Ablagepositionen dargestellt. Die drei unterschiedlichen Ablagepositionen sind dabei noch einmal vergrößert in Fig. 6, 7 und 8 dargestellt.

Auch bei dem hier gezeigten Ausführungsbeispiel sind wiederum zwei Nester 40 und 41 vorgesehen, welche auf einem Schlitten 42 angeordnet und über eine Verfahranordnung 43 verfahrbar sind. Die beiden Nester 41 und 42 weisen jeweils seitliche Begrenzungsschienen 49 auf, welche die Position der Werkstücke seitlich festlegen. Weiterhin ist jeweils ein Ablagepunkt 48 vorgesehen, welcher im Nest 40 auf der linken, im Nest 41 auf der rechten Seite angeordnet ist, und auf welchem bei der Ablage auf der A-Seite in Nest 41 bzw. B-Seite in Nest 40 der erhöht angeordnete Teil des Werkstücks abgelegt wird. Weiterhin sind die Öffnungen 50 im Boden der Nester zu sehen, durch welche die Pins 45 hindurch gehen.

Die Pins 45 sind jeweils in einer Führung 44 gelagert, und in dieser separat höhenverstellbar, um die in den Nestern 40 und 41 abgelegten Werkstücke anheben zu können. Zur Veränderung der relativen Höhe der Spitzen 47 der Pins zueinander werden die beiden Pins 45 dabei unterschiedlich weit angehoben.

In Fig. 5 und vergrößert in Fig. 6 bis 8 ist auch der Greifer 60 mit den Greiffingern 61 dargestellt, und zwar mit den jeweils zum Ablegen möglichen Greifpositionen am Werkstück.

Wie links in Fig. 5 und in Fig. 6 abgebildet, erfolgt ein Ablegen des Werkstücks 20, wenn es von der Seite gegriffen wurde, auf den Pins 45. Je nachdem, welche Seite dabei oben ist, wird der linke oder der rechte Pin höher angehoben. Alternativ wäre jedoch auch denkbar, die Werkstücke mit dem Greifer alle in die gleiche Ausrichtung zu drehen, so dass auf den Pins nur in einer Ablageposition abgelegt wird.

Wie in den beiden rechten Abbildungen in Fig. 5 und Fig. 7 und 8 dargestellt, erfolgt ein Ablegen eines Werkstückes, welches von oben oder unten gegriffen wurde, in ein Nest, und zwar je nach der Seite, von welcher gegriffen wurde, im Nest 40 oder 41.

Gemäß dem Ausführungsbeispiel erfolgt das Abnehmen der Werkstücke immer in der links in Fig. 5 bzw. in Fig. 6 gezeigten, auf den Pins aufgelegten Position. Hierfür werden die in die Nester abgelegten Werkstücke über die Pins angehoben. Hierfür fährt das jeweilige Nest über die Pins, und die Pins werden durch die Öffnungen 50 nach oben gefahren. Je nachdem, mit welcher Seite das Werkstück abgelegt wurde und damit welches der beiden Nester über den Pins ist, wird der linke oder der rechte Pin höher angehoben.

Im Ausführungsbeispiel erfolgt das Abnehmen der Werkstücke von der Zwischenstation mit mindestens zwei zulässigen Greifpunkten, welche den beiden unterschiedlichen Ausrichtungen der Werkstücke (Seite A oder B oben) entsprechen. Wie in Fig. 5 links zu sehen, wird das Werkstück dabei seitlich gegriffen. Aus diesen zwei unterschiedlichen Greifpositionen ist jedoch allein über die Bewegung des Abnahmegreifers eine Platzierung der Werkstücke in der Ziel-Ablage möglich.

Alternativ wäre es denkbar, die Werkstücke auf der Zwischenablage noch einmal mit geänderter Ausrichtung abzulegen, um so für das endgültige Abnehmen von der Zwischenstation eine einzige Greifposition zur Verfügung stellen zu können.

Je nach Ausgestaltung der Werkstücke können dabei auch mehr Nester und / oder mehr Pin-Anordnungen oder ausschließlich Nester oder ausschließlich Pin-Anordnungen eingesetzt werden.

## Patentansprüche

1. Vorrichtung zum automatisierten Entnehmen von in einem Behälter (5) angeordneten Werkstücken,
mit einer Objekterkennungseinrichtung (6) zum Erfassen der Werkstücke und einem Greifer (7) zum Greifen und Entnehmen der Werkstücke aus dem Behälter,
einer Steuerung (1) zur Auswertung der Daten der Objekterkennungseinrichtung, zur Pfadplanung und zur automatischen Ansteuerung des Greifers (7), und einer Zwischenstation (10), auf welcher der Greifer die Werkstücke nach dem Entnehmen aus dem Behälter ablegt,
wobei die Werkstücke von einem Greifer (7, 11) von der Zwischenstation (10) aufgenommen und in einer Ziel-Ablage (15) abgelegt werden, und wobei
die Zwischenstation (10) mindestens zwei unterschiedliche Werkstück-Ablagen (40, 41, 45) zum Ablegen des Werkstücks in mindestens zwei unterschiedlichen, definierten Ablagepositionen aufweist.

2. Vorrichtung nach Anspruch 1, wobei das Greifen der Werkstücke im Behälter (5) mit einer Mehrzahl von unterschiedlichen zulässigen Greifpositionen (27-33) erfolgt, wobei bevorzugt die Auswahl der zum Ablegen genutzten Werkstück-Ablage (40, 41, 45) der Zwischenstation (10) auf Grundlage der Greifposition (27- 33) erfolgt, mit welcher das Werkstück aus dem Behälter entnommen wird oder wurde, wobei die Auswahl der Werkstück-Ablage (40, 41, 45) bevorzugt aufgrund einer vordefinierten Zuordnung zwischen bestimmten Greifpositionen (27- 33) und bestimmten Werkstück-Ablagen (40, 41, 45) erfolgt, und insbesondere über eine Abfrage in einer in der Steuerung (1) hinterlegten Zuordnungs-Tabelle.

3. Vorrichtung nach Anspruch 1 oder 2, wobei das Greifen der Werkstücke im Behälter mit einer Mehrzahl von unterschiedlichen zulässigen Greifpunkten (27- 33) sowie ggf. mit sich um diese Greifpunkte erstreckenden zulässigen Greifbereichen (27'- 33') erfolgt, und/oder wobei eine Kollisionsprüfung erfolgt, bei welcher anhand eines geometrischen Modells überprüft wird, ob ein kollisionsfreies Ablegen eines Werkstückes auf einer Werkstück-Ablage (40, 41, 45) möglich ist.

4. Vorrichtung nach einem der vorangegangenen Ansprüche, wobei das Aufnehmen des Werkstücks von der Zwischenstation mit weniger zulässigen Greifpositionen als das Greifen in dem Behälter (5) und bevorzugt mit nur einer Greifposition erfolgt.

5. Vorrichtung nach einem der vorangegangenen Ansprüche, wobei der selbe Greifer (7) zum Greifen der Werkstücke aus dem Behälter und zum Aufnehmen von der Zwischenablage eingesetzt wird oder wobei zwei separate Greifer (7, 11) zum Greifen der Werkstücke aus dem Behälter und zum Aufnehmen von der Zwischenablage (10) eingesetzt werden.

6. Vorrichtung nach einem der vorangegangenen Ansprüche, wobei es sich bei dem Greifer (7, 11) zum Greifen der Werkstücke im Behälter und/oder zum Aufnehmen von der Zwischenablage um einen magnetischen, pneumatischen oder mechanischen Greifer oder aus einer Kombination aus diesen, bevorzugt aus einem mechanischen Greifer handelt, insbesondere um einen Fingergreifer oder Backengreifer und/oder wobei der Greifer (7, 11) zum Greifen der Werkstücke aus dem Behälter und/oder zum Aufnehmen von der Zwischenablage durch einen Greifarm (8, 12) bewegt wird, wobei es sich vorteilhafterweise um einen Roboterarm eines 6-achsigen Roboters oder um einen an einem Flächen- oder Linearportal angeordneten Greiferarm handelt, wobei der Greifer weiterhin vorteilhafterweise über eine Greifarmverlängerung mit mindestens einer und bevorzugt zwei zusätzlichen Achsen am Greifarm angeordnet ist.

7. Vorrichtung nach einem der vorangegangenen Ansprüche, wobei das Aufnehmen des Werkstücks von der Zwischenstation (10) auf Grundlage der bekannten Position der verwendeten Werkstück-Ablage (40, 41, 45) und der bekannten Form des Werkstücks erfolgt, und bevorzugt ohne eine zuvorige Objekterkennung des Werkstücks auf der Zwischenstation (10).

8. Vorrichtung nach einem der vorangegangenen Ansprüche, wobei die Zwischenstation (10) eine Verstellanordnung (43, 44, 46) umfasst, welche eine Veränderung der Position und/oder Ausrichtung eines auf der Zwischenstation (10) abgelegten Werkstücks und/oder eines Ablageelementes (40, 41, 45) erlaubt, wobei das Werkstück bevorzugt von der Ablageposition in eine definierte Aufnahmeposition bewegt wird und/oder wobei bevorzugt die Positionsänderung des Werkstücks und/oder eines Ablageelementes (40, 41, 45) das Aufnehmen des Werkstücks mit einen Greifpunkt erlaubt, welcher in der Ablageposition nicht zur Verfügung stand.

9. Vorrichtung nach einem der vorangegangenen Ansprüche, wobei die Position mindestens einer der Werkstück-Ablagen (40, 41, 45) kinematisch verstellbar ist, wobei die Verstellung bevorzugt auf Grundlage der Greifposition (27- 33) erfolgt, mit welcher das Werkstück aus dem Behälter entnommen wird oder wurde, wobei bevorzugt die jeweils verwendete Werkstück-Ablage (40, 41, 45) in eine Ablageposition und/oder eine Aufnahmeposition verfahren wird.

10. Vorrichtung nach einem der vorangegangenen Ansprüche, mit mindestens einem kinematisch verstellbaren Ablageelement (45), wobei durch ein Verstellen des Ablageelementes mindestens zwei unterschiedliche Werkstück-Ablagen bereitgestellt werden und/oder wobei ein Werkstück nach dem Ablegen auf der Zwischenstation durch Verfahren des Ablageelementes (40, 41, 45) in eine Aufnahmeposition verfahrbar ist, wobei bevorzugt in zwei unterschiedliche Werkstück-Ablagen (40, 41, 45) abgelegte Werkstücke in eine identische Aufnahmeposition verfahrbar sind, und/oder wodurch das Ablageelement (40, 41, 45) durch das Verfahren einen Greifpunkt am Werkstück freigibt.

11. Vorrichtung nach einem der vorangegangenen Ansprüche, wobei die Zwischenstation mindestens ein Nest (40, 41), in welches ein Werkstück hineingelegt werden kann, und mindestens einen Pin (45), auf welchem ein Werkstück aufgelegt werden kann, aufweist, wobei bevorzugt der mindestens eine Pin (45) verfahrbar ist, und weiter bevorzugt ein Anheben eines in ein Nest (40, 41) abgelegten Werkstücks auf dem Pin (45) und/oder ein Absenken eines auf den Pin (45) aufgelegten Werkstücks in ein Nest (40, 41) erlaubt.

12. Vorrichtung nach einem der vorangegangenen Ansprüche, wobei die Zwischenstation mindestens zwei Nester (40, 41) und/oder mindestens zwei Pins (45) aufweist, wobei die beiden Pins (45) bevorzugt gegeneinander verstellbar sind, um hierdurch zwei unterschiedliche Werkstück-Ablagen bereitzustellen, und/oder wobei bevorzugt jedes der beiden Nester (40, 41) so über den oder die Pins verfahrbar ist (45), dass ein Anheben eines in das Nest (40, 41) abgelegten Werkstücks und/oder ein Absenken eines auf dem oder den Pins (45) aufgelegten Werkstücks in das Nest erfolgt.

13. Vorrichtung nach einem der vorangegangenen Ansprüche, mit einer ersten Steuerungskomponente (2), durch welche die Ansteuerung des Greifers (7) beim Entnehmen der Werkstücke aus dem Behälter (5) und beim Ablegen auf der Zwischenablage (10) erfolgt, und/oder mit einer zweiten Steuerungskomponente (3), durch welche die Ansteuerung des Greifers (7,11) beim Aufnehmen von der Zwischenablage (10) und beim Ablegen auf der Ziel-Ablage (15) erfolgt, wobei bevorzugt die erste Steuerungskomponente (2) den Greifer (7) nach dem Aufnehmen eines Werkstücks aus dem Behälter in eine vordefinierte Übergabeposition bewegt, von welcher aus die weitere Bewegung des Greifers (7) zur Ablage auf der Zwischenstation (10) erfolgt, und/oder wobei die zweite Steuerungskomponente (3) den Greifer (7, 11) bevorzugt auf einer oder mehreren vordefinierten und in der Steuerung abgespeicherten Bahnen zur Ziel-Ablage (15) bewegt.

14. Verfahren zum automatisierten Entnehmen von in einem Behälter (5) angeordneten Werkstücken, insbesondere unter Verwendung einer Vorrichtung nach einem der Ansprüche 1 bis 13, mit den Schritten:
- Erfassen der Werkstücke,
- Greifen mindestens eines Werkstückes mit einem Greifer (7),
- Entnehmen des Werkstückes aus dem Behälter (5),
- Ablegen des Werkstückes auf einer Zwischenstation (10) und
- Greifen des Werkstückes mit einem Greifer (7, 11) und Aufnehmen des Werkstücks von der Zwischenstation (10),
**dadurch gekennzeichnet,**
**dass** das Werkstück nach dem Entnehmen aus dem Behälter (5) in einer von mindestens zwei unterschiedlichen, definierten Ablagepositionen des Werkstücks auf der Zwischenstation (10) abgelegt wird.

## Claims

1. An apparatus for the automated removal of workpieces arranged in a container (5),
comprising an object recognition device (6) for detecting the workpieces and a gripper (7) for picking and removing the workpieces from the container;
a control (1) for evaluating the data of the object recognition device, for the path planning and for the automatic controlling of the gripper (7);
and a buffer station (10) on which the gripper places the workpieces after the removal from the container,
wherein the workpieces are picked up from the buffer station (10) by a gripper (7, 11) and are placed down in a target placement area (15),
and wherein
the buffer station (10) has at least two different workpiece placement areas (40, 41, 45) for the placing down of the workpiece in at least two different, defined placement positions.

2. An apparatus in accordance with claim 1, wherein the gripping of the workpieces in the container (5) takes place with a plurality of different permitted gripping positions (27 - 33); wherein the selection of the workpiece placement area (40, 41, 45) of the buffer station (10) used for the placement preferably takes place on the basis of the gripping position (27 - 33) with which the workpiece is or was removed from the container; wherein the selection of the workpiece placement area (40, 41, 45) preferably takes place on the basis of a predefined association between specific gripping positions (27 - 33) and specific workpiece placement areas (40, 41, 45), and in particular via a query in an association table stored in the control (1).

3. An apparatus in accordance with claim 1 or claim 2, wherein the gripping of the workpieces in the container takes place with a plurality of different permitted gripping points (27 - 33) as well as optionally with permitted gripping regions (27' - 33') extending about these gripping points; and/or wherein a collision test takes place in which a check is made with reference to a geometrical model as to whether a collision-free placing down of a workpiece on a workpiece placement area (40, 41, 45) is possible.

4. An apparatus in accordance with one of the preceding claims, wherein the picking up of the workpiece from the buffer station takes place with fewer permitted gripping positions than the gripping in the container (5) and preferably with only one gripping position.

5. An apparatus in accordance with one of the preceding claims, wherein the same gripper (7) is used for gripping the workpieces from the container and for picking them up from the buffer placement area; or wherein two separate grippers (7, 11) are used for gripping the workpieces from the container and for picking them up from the buffer placement area (10).

6. An apparatus in accordance with one of the preceding claims, wherein the gripper (7, 11) for gripping the workpieces in the container and/or for picking up from the buffer placement area is a magnetic, pneumatic or mechanical gripper or is a combination thereof, and is preferably a mechanical gripper, in particular a finger gripper or a jaw gripper; and/or wherein the gripper (7, 11) is moved by a gripping arm (8, 12) for the gripping of the workpieces from the container and/or for the picking up from the buffer placement areas, with it advantageously being a robot arm of a 6-axis robot or a gripping arm arranged at an area gantry or at a linear gantry, with the gripper further advantageously being arranged at the gripping arm via a gripping arm extension having at least one and preferably two additional axes.

7. An apparatus in accordance with one of the preceding claims, wherein the picking up of the workpiece from the buffer station (10) takes place on the basis of the known position of the used workpiece placement area (40, 41, 45) and the known shape of the workpiece and preferably without a previous object recognition of the workpiece on the buffer station (10).

8. An apparatus in accordance with one of the preceding claims, wherein the buffer station (10) comprises an adjustment arrangement (43, 44, 46) which allows a change of the position and/or alignment of a workpiece placed down on the buffer station (10) and/or of a placing element (40, 41, 45); wherein the workpiece is preferably moved from the placement position into a defined pick-up position; and/or wherein the positional change of the workpiece and/or of a placing element (40, 41, 45) preferably allows the picking up of the workpiece with a gripping point which was not available at the placement position.

9. An apparatus in accordance with one of the preceding claims, wherein the position of at least one of the workpiece placement areas (40, 41, 45) is kinematically adjustable, with the adjustment preferably taking place on the basis of the gripping position (27 - 33) with which the workpiece is or was removed from the container, with the respectively used workpiece placement area (40, 41, 45) preferably being traveled into a placement position and/or into a pick-up position.

10. An apparatus in accordance with one of the preceding claims, having at least one kinematically adjustable placing element (45), wherein at least two different workpiece placement areas are provided by an adjustment of the placing element; and/or wherein a workpiece is travelable into a pick-up position by traveling the placing element (40, 41, 45) after the placing down on the buffer station, with workpieces placed into two different workpiece placement areas (40, 41, 45) preferably being travelable into an identical pick-up position; and/or whereby the placing element (40, 41, 45) releases a gripping point at the workpiece by the traveling.

11. An apparatus in accordance with one of the preceding claims, wherein the buffer station has at least one nest (40, 41) into which a workpiece can be placed and has at least one pin (45) on which a workpiece can be placed; wherein the at least one pin (45) is preferably travelable and further preferably allows a raising of a workpiece placed into a nest (40, 41) on the pin (45) and/or a lowering of a workpiece placed onto the pin (45) into a nest (40, 41)

12. An apparatus in accordance with one of the preceding claims, wherein the buffer station has at least two nests (40, 41) and/or at least two pins (41); wherein the two pins /45) are preferably adjustable with respect to one another in order hereby to provide two different workpiece placement areas; and/or wherein preferably each of the two nests (40, 41) is travelable over the pin or pins (45) such that a raising of a workpiece placed into the nest (40, 41) and/or a lowering of a workpiece placed on the pin or pins (45) into the nest takes place.

13. An apparatus in accordance with one of the preceding claims, having a first control component (2) by which the control of the gripper (7) takes place on the removal of the workpieces from the container (5) and on the placing on the buffer placement area (10); and/or having a second control component (3) by which the control of the gripper (7, 11) takes place on the picking up from the buffer placement area (10) and on the placing down on the target placement area (15), wherein the first control component (2) preferably moves the gripper (7), after the picking up of a workpiece from the container, into a predefined transfer position from where the further movement of the gripper (7) for placing down on the buffer stations (10) takes place; and/or wherein the second control component (3) preferably moves the gripper (7, 11) on one or more predefined tracks stored in the control to the target placement area (15).

14. A method for the automatic removal of workpieces arranged in a container (5), in particular using an apparatus in accordance with one of the claims 1 to 13, comprising the steps:
- detecting the workpieces;
- gripping at least one workpiece using a gripper (7),
- removing the workpiece from the container (5),
- placing down the workpiece on a buffer station (10); and
- gripping the workpiece using a gripper (7, 11) and picking up the workpiece from the buffer station (10),
**characterized in that**
the workpieces are placed down, after the removal from the container (5), in one of at least two different, defined placement positions of the workpiece on the buffer station (10).

## Revendications

1. Dispositif de prélèvement automatisé de pièces agencées dans un récipient (5),
comportant un dispositif de reconnaissance d'objets (6) destiné à la détection des pièces et un préhenseur (7) destiné à la préhension et au prélèvement des pièces hors du récipient,
une commande (1) destinée à l'évaluation des données du dispositif de reconnaissance d'objets, à la planification du chemin et à la commande automatique du préhenseur (7), et un poste intermédiaire (10), sur lequel le préhenseur dépose les pièces après le prélèvement hors du récipient,
les pièces étant saisies par un préhenseur (7, 11) depuis le poste intermédiaire (10) et déposées dans un espace de dépôt cible (15),
et le poste intermédiaire (10) présentant au moins deux espaces de dépôt de pièces (40, 41, 45) différents pour déposer la pièce dans au moins deux différentes positions de dépôt définies.

2. Dispositif selon la revendication 1, dans lequel la préhension des pièces dans le récipient (5) est effectuée avec une pluralité de différentes positions de préhension (27-33) autorisées, la sélection de l'espace de dépôt de pièces (40, 41, 45) du poste intermédiaire (10) utilisé pour le dépôt étant de préférence effectuée sur la base de la position de préhension (27-33), avec laquelle la pièce est ou a été prélevée hors du récipient, la sélection de l'espace de dépôt de pièces (40, 41, 45) étant de préférence effectuée sur la base d'une association prédéfinie entre des positions de préhension (27-33) données et des espaces de dépôt de pièces (40, 41, 45) donnés, et en particulier par le biais d'une interrogation dans une table de correspondances enregistrée dans la commande (1).

3. Dispositif selon la revendication 1 ou 2, dans lequel la préhension des pièces dans le récipient est effectuée avec une pluralité de différents points de préhension (27-33) autorisés ainsi que, le cas échéant, avec des zones de préhension (27'-33') autorisées s'étendant autour de ces points de préhension, et/ou dans lequel un contrôle de collisions est effectué, pour lequel il est vérifié à l'aide d'un modèle géométrique si un dépôt sans collision d'une pièce est possible sur un espace de dépôt de pièces (40, 41, 45).

4. Dispositif selon l'une des revendications précédentes, dans lequel la saisie de la pièce depuis le poste intermédiaire est effectuée avec moins de positions de préhension autorisées que la préhension dans le récipient (5) et de préférence avec seulement une position de préhension.

5. Dispositif selon l'une des revendications précédentes, dans lequel le même préhenseur (7) est utilisé pour la préhension des pièces hors du récipient et pour la saisie depuis l'espace de dépôt intermédiaire ou dans lequel deux préhenseurs (7) séparés sont utilisés pour la préhension des pièces hors du récipient et pour la saisie depuis l'espace de dépôt intermédiaire (10).

6. Dispositif selon l'une des revendications précédentes, dans lequel le préhenseur (7, 11) destiné à la préhension des pièces dans le récipient et/ou à la saisie depuis l'espace de dépôt intermédiaire est un préhenseur magnétique, pneumatique ou mécanique ou un préhenseur présentant une combinaison de ceux-ci, de préférence un préhenseur mécanique, en particulier un préhenseur à doigts ou préhenseur à pince et/ou dans lequel le préhenseur (7, 11) destiné à la préhension des pièces hors du récipient et/ou à la saisie depuis l'espace de dépôt intermédiaire est déplacé par un bras de préhension (8, 12), celui-ci étant avantageusement un bras de robot d'un robot à 6 axes ou un bras de préhension agencé sur un portique de surface ou un portique linéaire, le préhenseur étant en outre agencé avantageusement avec au moins un et de préférence deux axes supplémentaires sur le bras de préhension par le biais d'une extension de bras de préhension.

7. Dispositif selon l'une des revendications précédentes, dans lequel la saisie de la pièce depuis le poste intermédiaire (10) est effectuée sur la base de la position connue de l'espace de dépôt de pièces (40, 41, 45) utilisé et de la forme connue de la pièce, et de préférence sans reconnaissance d'objets préalable de la pièce sur le poste intermédiaire (10).

8. Dispositif selon l'une des revendications précédentes, dans lequel le poste intermédiaire (10) comprend un agencement de réglage (43, 44, 46), qui permet une modification de la position et/ou de l'orientation d'une pièce déposée sur le poste intermédiaire (10) et/ou d'un élément de dépôt (40, 41, 45), la pièce étant de préférence déplacée de la position de dépôt à une position de saisie définie et/ou la modification de position de la pièce et/ou de l'élément de dépôt (40, 41, 45) permettant de préférence la saisie de la pièce avec un point de préhension qui n'était pas disponible dans la position de dépôt.

9. Dispositif selon l'une des revendications précédentes, dans lequel la position d'au moins un des espaces de dépôt de pièces (40, 41, 45) peut être réglée de manière cinématique, le réglage étant de préférence effectué sur la base de la position de préhension (27-33) avec laquelle la pièce est ou a été prélevée hors du récipient, l'espace de dépôt de pièces (40, 41, 45) respectivement utilisé étant de préférence déplacé dans une position de dépôt et/ou une position de saisie.

10. Dispositif selon l'une des revendications précédentes, comprenant au moins un élément de dépôt (45) réglable de manière cinématique, au moins deux espaces de dépôt de pièces différents étant mis à disposition par un réglage de l'élément de dépôt et/ou dans lequel une pièce peut être déplacée, après le dépôt sur le poste intermédiaire, par le déplacement de l'élément de dépôt (40, 41, 45) dans une position de saisie, des pièces déposées dans deux différents espaces de dépôt de pièces (40, 41, 45) pouvant de préférence être déplacées dans une position de saisie identique, et/ou moyennant quoi l'élément de dépôt (40, 41, 45) libère un point de préhension sur la pièce par ce procédé.

11. Dispositif selon l'une des revendications précédentes, dans lequel le poste intermédiaire présente au moins un nid (40, 41), dans lequel une pièce peut être placée, et au moins une tige (45), sur laquelle une pièce peut être placée, l'au moins une tige (45) pouvant de préférence être déplacée, et permettant de préférence encore un levage d'une pièce déposée dans un nid (40, 41) sur la tige (45) et/ou une descente d'une pièce placée sur la tige (45) dans un nid (40, 41).

12. Dispositif selon l'une des revendications précédentes, dans lequel le poste intermédiaire présente au moins deux nids (40, 41) et/ou au moins deux tiges (45), les deux tiges (45) étant de préférence réglables l'une par rapport à l'autre pour mettre ainsi à disposition deux espaces de dépôt de pièces différents, et/ou dans lequel chacun des deux nids (40, 41) peut de préférence être déplacé (45) au-dessus du ou des tiges de telle manière qu'un levage d'une pièce déposée dans le nid (40, 41) et/ou une descente d'une pièce placée sur la ou les tiges (45) est effectué(e) dans le nid.

13. Dispositif selon l'une des revendications précédentes, comportant un premier composant de commande (2), par lequel la commande du préhenseur (7) pour le prélèvement des pièces hors du récipient (5) et pour le dépôt sur le poste intermédiaire (10) est effectuée, et/ou comportant un second composant de commande (3), par lequel la commande du préhenseur (7, 11) pour la saisie depuis le poste intermédiaire (10) et pour le dépôt sur l'espace de dépôt cible (15) est effectuée, le premier composant de commande (2) déplaçant de préférence le préhenseur (7) après la saisie d'une pièce hors du récipient dans une position de de transfert prédéfinie, de laquelle la poursuite du mouvement du préhenseur (7) est effectuée pour le dépôt sur le poste intermédiaire (10), et/ou dans lequel le second composant de commande (3) déplace le préhenseur (7, 11) de préférence sur une ou plusieurs voies prédéfinies et enregistrées dans la commande vers l'espace de dépôt cible (15).

14. Procédé de prélèvement automatisé de pièces agencées dans un récipient (5), en particulier au moyen d'un dispositif selon l'une des revendications 1 à 13, comportant les étapes :
- détection des pièces,
- préhension d'au moins une pièce avec un préhenseur (7),
- prélèvement de la pièce hors du récipient (5),
- dépôt de la pièce sur un poste intermédiaire (10) et
- préhension de la pièce avec un préhenseur (7, 11) et saisie de la pièce depuis le poste intermédiaire (10),
**caractérisé en ce que**
après le prélèvement hors du récipient (5), la pièce est déposée sur le poste intermédiaire (10) dans une d'au moins deux différentes positions de dépôt définies de la pièce.
